# EUROPEAN PATENT APPLICATION

(11) **EP 4 543 083 A1**
(43) Date of publication of application: **23.04.2025**
(21) Application number: 23822752.4
(22) Date of filing: 07.04.2023
(51) Int. Cl.: H04W 36/00

(54) **INDICATION METHOD, TERMINAL, AND NETWORK SIDE DEVICE**

(30) Priority: 16.06.2022 CN 202210689048
(71) Applicant: Datang Mobile Communications Equipment Co., Ltd., Beijing 100085 (CN)
(72) Inventor: ZHANG, Bufang, Beijing 100085 (CN); ZENG, Erlin, Beijing 100085 (CN); XU, Meng, Beijing 100085 (CN)
(74) Representative: Studio Torta S.p.A.
(86) International application number: PCT/CN2023/086942
(87) International publication number: WO 2023/241181

(57) **Abstract**

An indication method, a terminal and a network-side device are provided in the present disclosure, the indication method including: a terminal receiving a first command, where the first command is a Layer 1 command and/or a Layer 2 command; after the terminal successfully accesses a target cell according to the first command, the terminal sending first indication information and/or uplink data to a network-side device; where the first indication information is configured to indicate that the terminal successfully accesses the target cell.

## Description

### CROSS REFERENCE OF RELATED APPLICATION

The present disclosure claims a priority of Chinese patent disclosure No. 202210689048.2 filed on June 16, 2022, which is incorporated herein by reference in its entirety.

### TECHNICAL FIELD

The present disclosure relates to the field of communication technology, and in particular to an indication method, a terminal, and a network-side device.

### BACKGROUND

In the current technology, only Layer 3 (L3) is supported to trigger the mobility management (service cell change) of the terminal. The user mobility management triggered by L3 includes: real-time service cell change and conditional service cell change. The process of real-time service cell change triggered by L3 is as follows:

When the network-side decides to change the serving cell of the terminal or user equipment (UE) from the current cell to another cell, the network-side sends a Radio Resource Control (RRC) reconfiguration message to the UE, which carries the configuration information required for the UE to access the target cell; when the UE receives the RRC reconfiguration message sent by the network-side, the UE applies the configuration information of the target cell included in the reconfiguration message, initiates random access with the target cell side for synchronization, and feeds back an RRC reconfiguration completion message to the target cell side to indicate that the UE on the network-side has successfully accesses the target cell.

The L3 triggered conditional serving cell change process is as follows:
The network-side pre-configures multiple target cells for the UE, that is, the configuration information and execution conditions of the target cells are sent to the UE in advance. When the UE receives the configuration information of the target cell, it will not immediately perform the switching or PSCell change or PSCell addition like the traditional switching, primary secondary cell change (PSCell change) or primary secondary cell addition (PSCell addition), but will save the received configuration and measure and evaluate the configured candidate cells until there is a cell that meets the execution conditions. The UE will then execute the stored reconfiguration message corresponding to the cell, perform the corresponding switching or PSCell change or PSCell addition process, that is, complete the downlink synchronization and trigger the random access process to access the target PCell or PSCell, and feedback the corresponding reconfiguration completion message to the network-side.

Optionally, the service cell change mentioned in the present disclosure includes at least one of the following: primary cell change; cell handover; primary and secondary cell change; primary and secondary cell addition; secondary cell addition; secondary cell change.

With the development of technology, it is considered to introduce support for Layer 1 (L1) or Layer 2 (L2) mobility in the future. In this scenario, the service cell change can be triggered by L1/L2 commands. However, the current technology does not specify the subsequent operations of triggering the cell change by L1/L2 commands, for example, how the network-side knows whether the terminal has successfully accessed the target cell.

### SUMMARY

The purpose of the embodiments of the present disclosure is to provide an indication method, a terminal and a network-side device to solve the problem that the related technology does not specify the subsequent operation of triggering the service cell change through the L1/L2 command, resulting in inconsistent behavior between the terminal and the network-side, or even switching failure.

The present disclosure provides an indication method, which includes:
a terminal receiving a first command, where the first command is a Layer 1 command and/or a Layer 2 command;
after the terminal successfully accesses a target cell according to the first command, the terminal sending first indication information and/or uplink data to a network-side device; where the first indication information is configured to indicate that the terminal successfully accesses the target cell; the uplink data is further configured to implicitly indicate that the terminal successfully accesses the target cell.

Optionally, the first command is configured to instruct the terminal to perform at least one of the following operations:
change of primary cell;
cell handover;
change of primary and secondary cells;
addition of primary and secondary cells;
addition of secondary cell;
change of secondary cell.

Optionally, the first indication information includes at least one of the following:
uplink radio resource control (RRC) message;
uplink control information (UCI);
uplink media access control control element (MAC CE);
pre-configured dedicated uplink signal.

Optionally, the uplink data is carried by at least one of the following:
a physical uplink shared channel (PUSCH) scrambled through a cell-radio network temporary identifier (C-RNTI) of the terminal;
uplink shared channel (UL-SCH).

Optionally, the first indication information includes at least one of the following information:
terminal identifier;
target cell identifier;
indication of successful access to the target cell;
beam index;
transmission configuration indication (TCI) identifier.

Optionally, the terminal sending the first indication information to the network-side device including at least one of the following:
the terminal directly sending the first indication information on a pre-configured uplink resource;
the terminal sending the first indication information on a pre-configured uplink resource activated by a first DCI scrambled by a C-RNTI;
the terminal sending the first indication information on an uplink resource scheduled by a second DCI scrambled by a C-RNTI;
the terminal sending the first indication information on an uplink resource obtained in a random access process; where the random access process includes: a contention random access process or a non-contention random access process;
the terminal sending the first indication information on an uplink resource applied through an uplink scheduling request (SR);
the uplink resource includes: a physical uplink control channel (PUCCH) resource and/or a physical uplink shared channel (PUSCH) resource.

Optionally, the method further includes:
the terminal determining the pre-configured uplink resource according to first resource configuration information received before receiving the first command;
   or,
the terminal determining the pre-configured uplink resource according to first resource configuration information carried by the first command;
where the first resource configuration information is configured to provide the pre-configured uplink resource for the terminal.

Optionally, when the random access process is a non-contention random access, the method further includes:
the terminal determining, according to second resource configuration information received before receiving the first command, a preconfigured random access channel (RACH) resource, and initiating the non-contention random access process on the preconfigured RACH resource;
   or,
the terminal determining, according to second resource configuration information carried by the first command, a preconfigured RACH resource, and initiating the non-contention random access process on the preconfigured RACH resource;
where the second resource configuration information is configured to pre-configure the RACH resource.

Optionally, the method further includes:
the terminal sending an SR to the network-side device, where the SR is configured to apply for an uplink resource for sending the first indication information;
the terminal receiving third resource configuration information sent by the network-side device; where the third resource configuration information is configured to configure uplink resources for the terminal to send the first indication information.

Optionally, before the terminal sending the SR to the network-side device, the method includes:
the terminal receiving fourth resource configuration information sent by the network-side device before receiving the first command, or the terminal obtaining fourth resource configuration information sent by the network-side device in the first command;
the terminal determining, according to the fourth resource configuration information, a pre-configured SR resource for sending the SR;
where the fourth resource configuration information is configured to pre-configure the SR resource.

Optionally, when the first indication information is a preconfigured dedicated uplink signal, the method further includes:
the terminal receiving configuration information of a dedicated uplink signal for the target cell sent by the network-side device before receiving the first command; or the terminal obtaining configuration information of a dedicated uplink signal for the target cell sent by the network-side device in the first command;
where the terminal determining a sending resource of the dedicated uplink signal according to the configuration information of the dedicated uplink signal.

A method of indicating is further provided in the embodiment of the present disclosure, including:
a network-side device receiving a first indication information and/or uplink data sent by the terminal;
the network-side device determining, based on the first indication information and/or the uplink data, that the terminal successfully accesses a target cell according to a first command; where the first command is a Layer 1 command and/or a Layer 2 command.

Optionally, the first command is configured to instruct the terminal to perform at least one of the following operations:
change of primary cell;
cell handover;
change of primary and secondary cells;
addition of primary and secondary cells;
addition of secondary cell;
change of secondary cell.

Optionally, the first indication information includes at least one of the following:
uplink radio resource control (RRC) message;
uplink control information (UCI);
uplink media access control control element (MAC CE);
pre-configured dedicated uplink signal.

Optionally, the uplink data is carried by at least one of the following:
a physical uplink shared channel (PUSCH) scrambled through a cell-radio network temporary identifier (C-RNTI) of the terminal;
uplink shared channel (UL-SCH).

Optionally, the first indication information includes at least one of the following information:
terminal identifier;
target cell identifier;
indication of successful access to the target cell;
beam index;
transmission configuration indication (TCI) identifier.

Optionally, when the first indication information includes a beam index and/or a TCI identifier, the method further includes:
the network-side device transmitting data according to a beam indicated by the beam index and/or the TCI identifier.

Optionally, the network-side device receiving the first indication information sent by the terminal includes at least one of the following:
the network-side device receiving the first indication information which is sent by the terminal on a preconfigured uplink resource;
the network-side device receiving the first indication information which is sent by the terminal on a pre-configured uplink resource activated by first DCI scrambled by a C-RNTI;
the network-side device receiving the first indication information which is sent by the terminal on an uplink resource scheduled by second DCI scrambled by a C-RNTI;
the network-side device receiving the first indication information which is sent by the terminal on the uplink resource obtained in the random access process; where the random access process includes: a contention random access process or a non-contention random access process;
the network-side device receiving the first indication information which is sent by the terminal on the uplink resource applied through an uplink scheduling request (SR);
where the uplink resource includes: a physical uplink control channel (PUCCH) resource and/or a physical uplink shared channel (PUSCH) resource.

Optionally, the method further includes:
the network-side device sending first resource configuration information to the terminal before sending the first command;
   or,
the network-side device sending a first command carrying first resource configuration information to the terminal;
where the first resource configuration information is configured to provide the pre-configured uplink resource to the terminal.

Optionally, when the random access process is the non-contention random access, the method further includes:
the network-side device sending second resource configuration information to the terminal before sending the first command;
   or,
the network-side device sending a first command carrying second resource configuration information to the terminal;
where the second resource configuration information is configured to pre-configure a random access channel (RACH) resource.

Optionally, the method further includes:
the network-side device receiving the uplink scheduling request (SR) sent by the terminal, where the SR is configured to apply for an uplink resource for sending the first indication information;
the network-side device sending third resource configuration information to the terminal according to the SR;
where the third resource configuration information is configured to pre-configure uplink resources for the terminal to send the first indication information.

Optionally, before the network-side device receiving the uplink scheduling request sent by the terminal, the method further includes:
the network-side device sending fourth resource configuration information to the terminal before sending the first command, or the network-side device carrying the fourth resource configuration information in the first command; where the fourth resource configuration information is configured to configure a pre-configured SR resource for sending an SR.

Optionally, when the first indication information is the preconfigured dedicated uplink signal, the method further includes:
sending configuration information for the dedicated uplink signal for the target cell to the terminal before sending the first command; or, sending to the terminal the first command carrying configuration information for the dedicated uplink signal for the target cell;
where the configuration information of the dedicated uplink signal is configured to configure sending resources of the dedicated uplink signal.

A terminal is further provided in the embodiment of the present disclosure, including:
a first receiving unit, configured to receive a first command, where the first command is a Layer 1 command and/or a Layer 2 command;
a first sending unit, configured to, after the terminal successfully accesses a target cell according to the first command, send first indication information and/or uplink data to a network-side device; where the first indication information is configured to indicate that the terminal successfully accesses the target cell; the uplink data is further configured to implicitly indicate that the terminal successfully accesses the target cell.

Optionally, the first command is configured to instruct the terminal to perform at least one of the following operations:
change of primary cell;
cell handover;
change of primary and secondary cells;
addition of primary and secondary cells;
addition of secondary cell;
change of secondary cell.

Optionally, the first indication information includes at least one of the following:
uplink radio resource control (RRC) message;
uplink control information (UCI);
uplink media access control control element (MAC CE);
pre-configured dedicated uplink signal.

Optionally, the uplink data is carried by at least one of the following:
a physical uplink shared channel (PUSCH) scrambled through a cell-radio network temporary identifier (C-RNTI) of the terminal;
uplink shared channel (UL-SCH).

Optionally, the first indication information includes at least one of the following information:
terminal identifier;
target cell identifier;
indication of successful access to the target cell;
beam index;
transmission configuration indication (TCI) identifier.

Optionally, first sending unit is configured to perform at least one of the following:
directly sending the first indication information on a pre-configured uplink resource;
sending the first indication information on a pre-configured uplink resource activated by a first DCI scrambled by a C-RNTI;
sending the first indication information on an uplink resource scheduled by a second DCI scrambled by a C-RNTI;
sending the first indication information on an uplink resource obtained in a random access process; where the random access process includes: a contention random access process or a non-contention random access process;
sending the first indication information on an uplink resource applied through an uplink scheduling request (SR);
the uplink resource includes: a physical uplink control channel (PUCCH) resource and/or a physical uplink shared channel (PUSCH) resource.

Optionally, the terminal further includes:
a first resource determining unit, configured to
determine the pre-configured uplink resource according to first resource configuration information received before receiving the first command;
   or,
determine the pre-configured uplink resource according to first resource configuration information carried by the first command;
where the first resource configuration information is configured to provide the pre-configured uplink resource for the terminal.

Optionally, when the random access process is a non-contention random access, the terminal further includes: a second resource determining unit configured to
determine, according to second resource configuration information received before receiving the first command, a preconfigured random access channel (RACH) resource, and initiate the non-contention random access process on the preconfigured RACH resource;
   or,
determine, according to second resource configuration information carried by the first command, a preconfigured RACH resource, and initiate the non-contention random access process on the preconfigured RACH resource;
where the second resource configuration information is configured to pre-configure the RACH resource.

Optionally, the terminal further includes:
a SR sending unit configured to send an SR to the network-side device, where the SR is configured to apply for an uplink resource for sending the first indication information;
an information obtaining unit, configured to receive third resource configuration information sent by the network-side device;
where the third resource configuration information is configured to configure uplink resources for the terminal to send the first indication information.

Optionally, the terminal further includes:
an applying unit, configured to receive fourth resource configuration information sent by the network-side device before receiving the first command, or obtain fourth resource configuration information sent by the network-side device in the first command;
a third resource determining unit, configured to determine, according to the fourth resource configuration information, a pre-configured SR resource for sending the SR;
where the fourth resource configuration information is configured to pre-configure the SR resource.

Optionally, when the first indication information is a preconfigured dedicated uplink signal, the terminal further includes:
a configuration receiving unit, configured to receive configuration information of a dedicated uplink signal for the target cell sent by the network-side device before receiving the first command; or obtain configuration information of a dedicated uplink signal for the target cell sent by the network-side device in the first command;
a fourth resource determining unit, configured to determine a sending resource of the dedicated uplink signal according to the configuration information of the dedicated uplink signal.

A terminal is further provided in the embodiment of the present disclosure, including a memory, a transceiver, and a processor, where
the memory is configured to store a computer program; the transceiver is configured to transmit and receive data under a control of the processor; and the processor is configured to read the computer program in the memory to perform:
receiving a first command, where the first command is a Layer 1 command and/or a Layer 2 command;
after the terminal successfully accesses a target cell according to the first command, sending first indication information and/or uplink data to a network-side device; where the first indication information is configured to indicate that the terminal successfully accesses the target cell; the uplink data is further configured to implicitly indicate that the terminal successfully accesses the target cell.

Optionally, the first command is configured to instruct the terminal to perform at least one of the following operations:
change of primary cell;
cell handover;
change of primary and secondary cells;
addition of primary and secondary cells;
addition of secondary cell;
change of secondary cell.

Optionally, the first indication information includes at least one of the following:
uplink radio resource control (RRC) message;
uplink control information (UCI);
uplink media access control control element (MAC CE);
pre-configured dedicated uplink signal.

Optionally, the uplink data is carried by at least one of the following:
a physical uplink shared channel (PUSCH) scrambled through a cell-radio network temporary identifier (C-RNTI) of the terminal;
uplink shared channel (UL-SCH).

Optionally, the first indication information includes at least one of the following information:
terminal identifier;
target cell identifier;
indication of successful access to the target cell;
beam index;
transmission configuration indication (TCI) identifier.

Optionally, the processor is further configured to read the computer program in the memory to perform at least one of the following:
directly sending the first indication information on a pre-configured uplink resource;
sending the first indication information on a pre-configured uplink resource activated by a first DCI scrambled by a C-RNTI;
sending the first indication information on an uplink resource scheduled by a second DCI scrambled by a C-RNTI;
sending the first indication information on an uplink resource obtained in a random access process; where the random access process includes: a contention random access process or a non-contention random access process;
sending the first indication information on an uplink resource applied through an uplink scheduling request (SR);
the uplink resource includes: a physical uplink control channel (PUCCH) resource and/or a physical uplink shared channel (PUSCH) resource.

Optionally, the processor is further configured to read the computer program in the memory to perform:
determining the pre-configured uplink resource according to first resource configuration information received before receiving the first command;
   or,
determining the pre-configured uplink resource according to first resource configuration information carried by the first command;
where the first resource configuration information is configured to provide the pre-configured uplink resource for the terminal.

Optionally, when the random access process is a non-contention random access, the processor is further configured to read the computer program in the memory to perform
determining, according to second resource configuration information received before receiving the first command, a preconfigured random access channel (RACH) resource, and initiating the non-contention random access process on the preconfigured RACH resource;
   or,
determining, according to second resource configuration information carried by the first command, a preconfigured RACH resource, and initiating the non-contention random access process on the preconfigured RACH resource;
where the second resource configuration information is configured to pre-configure the RACH resource.

Optionally, the processor is further configured to read the computer program in the memory to perform:
sending an SR to the network-side device, where the SR is configured to apply for an uplink resource for sending the first indication information;
receiving third resource configuration information sent by the network-side device;
where the third resource configuration information is configured to configure uplink resources for the terminal to send the first indication information.

Optionally, the processor is further configured to read the computer program in the memory to perform:
receiving fourth resource configuration information sent by the network-side device before receiving the first command, or the terminal obtaining fourth resource configuration information sent by the network-side device in the first command;
determining, according to the fourth resource configuration information, a pre-configured SR resource for sending the SR;
where the fourth resource configuration information is configured to pre-configure the SR resource.

Optionally, when the first indication information is a preconfigured dedicated uplink signal, the processor is further configured to read the computer program in the memory to perform:
receiving configuration information of a dedicated uplink signal for the target cell sent by the network-side device before receiving the first command; or obtaining configuration information of a dedicated uplink signal for the target cell sent by the network-side device in the first command;
determining a sending resource of the dedicated uplink signal according to the configuration information of the dedicated uplink signal.

A network-side device is further provided in the embodiment of the present disclosure, including:
a second receiving unit, configured to receive a first indication information and/or uplink data sent by the terminal;
a determining unit, configured to determine, based on the first indication information and/or the uplink data, that the terminal successfully accesses a target cell according to a first command; where the first command is a Layer 1 command and/or a Layer 2 command.

Optionally, the first command is configured to instruct the terminal to perform at least one of the following operations:
change of primary cell;
cell handover;
change of primary and secondary cells;
addition of primary and secondary cells;
addition of secondary cell;
change of secondary cell.

Optionally, the first indication information includes at least one of the following:
uplink radio resource control (RRC) message;
uplink control information (UCI);
uplink media access control control element (MAC CE);
pre-configured dedicated uplink signal.

Optionally, the uplink data is carried by at least one of the following:
a physical uplink shared channel (PUSCH) scrambled through a cell-radio network temporary identifier (C-RNTI) of the terminal;
uplink shared channel (UL-SCH).

Optionally, the first indication information includes at least one of the following information:
terminal identifier;
target cell identifier;
indication of successful access to the target cell;
beam index;
transmission configuration indication (TCI) identifier.

Optionally, when the first indication information includes a beam index and/or a TCI identifier, the method further includes:
a data transmission unit, configured to transmit data according to a beam indicated by the beam index and/or the TCI identifier.

Optionally, the second receiving unit is configured to perform at least one of the following:
receiving the first indication information which is sent by the terminal on a preconfigured uplink resource;
receiving the first indication information which is sent by the terminal on a pre-configured uplink resource activated by first DCI scrambled by a C-RNTI;
receiving the first indication information which is sent by the terminal on an uplink resource scheduled by second DCI scrambled by a C-RNTI;
receiving the first indication information which is sent by the terminal on the uplink resource obtained in the random access process; where the random access process includes: a contention random access process or a non-contention random access process;
receiving the first indication information which is sent by the terminal on the uplink resource applied through an uplink scheduling request (SR);
where the uplink resource includes: a physical uplink control channel (PUCCH) resource and/or a physical uplink shared channel (PUSCH) resource.

Optionally, the network-side device further includes:
a third sending unit, configured to send first resource configuration information to the terminal before sending the first command;
   or,
send a first command carrying first resource configuration information to the terminal;
where the first resource configuration information is configured to provide the pre-configured uplink resource to the terminal.

Optionally, when the random access process is the non-contention random access, the network-side device further includes:
a fourth sending unit, configured to send second resource configuration information to the terminal before sending the first command;
   or,
send a first command carrying second resource configuration information to the terminal;
where the second resource configuration information is configured to pre-configure a random access channel (RACH) resource.

Optionally, the network-side device further includes:
a third receiving unit, configured to receive the uplink scheduling request (SR) sent by the terminal, where the SR is configured to apply for an uplink resource for sending the first indication information;
a fifth sending unit, configured to send third resource configuration information to the terminal according to the SR;
where the third resource configuration information is configured to pre-configure uplink resources for the terminal to send the first indication information.

Optionally, the network-side device further includes:
a sixth sending unit, configured to send fourth resource configuration information to the terminal before sending the first command, or carry the fourth resource configuration information in the first command; where the fourth resource configuration information is configured to configure a pre-configured SR resource for sending an SR.

Optionally, when the first indication information is the preconfigured dedicated uplink signal, the network-side device further includes:
a seventh sending unit, configured to send configuration information for the dedicated uplink signal for the target cell to the terminal before sending the first command; or, send to the terminal the first command carrying configuration information for the dedicated uplink signal for the target cell;
where the configuration information of the dedicated uplink signal is configured to configure sending resources of the dedicated uplink signal.

A network-side device, including a memory, a transceiver, and a processor, where
the memory is configured to store a computer program; the transceiver is configured to transmit and receive data under a control of the processor; and the processor is configured to read the computer program in the memory to perform:
receiving a first indication information and/or uplink data sent by the terminal;
determining, based on the first indication information and/or the uplink data, that the terminal successfully accesses a target cell according to a first command; where the first command is a Layer 1 command and/or a Layer 2 command.

Optionally, the first command is configured to instruct the terminal to perform at least one of the following operations:
change of primary cell;
cell handover;
change of primary and secondary cells;
addition of primary and secondary cells;
addition of secondary cell;
change of secondary cell.

Optionally, the first indication information includes at least one of the following:
uplink radio resource control (RRC) message;
uplink control information (UCI);
uplink media access control control element (MAC CE);
pre-configured dedicated uplink signal.

Optionally, the uplink data is carried by at least one of the following:
a physical uplink shared channel (PUSCH) scrambled through a cell-radio network temporary identifier (C-RNTI) of the terminal;
uplink shared channel (UL-SCH).

Optionally, the first indication information includes at least one of the following information:
terminal identifier;
target cell identifier;
indication of successful access to the target cell;
beam index;
transmission configuration indication (TCI) identifier.

Optionally, when the first indication information includes a beam index and/or a TCI identifier, processor is further configured to read the computer program in the memory to perform:
transmitting data according to a beam indicated by the beam index and/or the TCI identifier.

Optionally, the processor is further configured to read the computer program in the memory to perform at least one of the following:
receiving the first indication information which is sent by the terminal on a preconfigured uplink resource;
receiving the first indication information which is sent by the terminal on a pre-configured uplink resource activated by first DCI scrambled by a C-RNTI;
receiving the first indication information which is sent by the terminal on an uplink resource scheduled by second DCI scrambled by a C-RNTI;
receiving the first indication information which is sent by the terminal on the uplink resource obtained in the random access process; where the random access process includes: a contention random access process or a non-contention random access process;
receiving the first indication information which is sent by the terminal on the uplink resource applied through an uplink scheduling request (SR);
where the uplink resource includes: a physical uplink control channel (PUCCH) resource and/or a physical uplink shared channel (PUSCH) resource.

Optionally, the processor is further configured to read the computer program in the memory to perform:
sending first resource configuration information to the terminal before sending the first command;
   or,
sending a first command carrying first resource configuration information to the terminal;
where the first resource configuration information is configured to provide the pre-configured uplink resource to the terminal.

Optionally, when the random access process is the non-contention random access, the processor is further configured to read the computer program in the memory to perform:
sending second resource configuration information to the terminal before sending the first command;
   or,
sending a first command carrying second resource configuration information to the terminal;
where the second resource configuration information is configured to pre-configure a random access channel (RACH) resource.

Optionally, the processor is further configured to read the computer program in the memory to perform:
receiving the uplink scheduling request (SR) sent by the terminal, where the SR is configured to apply for an uplink resource for sending the first indication information;
sending third resource configuration information to the terminal according to the SR;
where the third resource configuration information is configured to pre-configure uplink resources for the terminal to send the first indication information.

Optionally, the processor is further configured to read the computer program in the memory to perform:
sending fourth resource configuration information to the terminal before sending the first command, or carrying the fourth resource configuration information in the first command; where the fourth resource configuration information is configured to configure a pre-configured SR resource for sending an SR.

Optionally, when the first indication information is the preconfigured dedicated uplink signal, the processor is further configured to read the computer program in the memory to perform:
sending configuration information for the dedicated uplink signal for the target cell to the terminal before sending the first command; or, sending to the terminal the first command carrying configuration information for the dedicated uplink signal for the target cell;
where the configuration information of the dedicated uplink signal is configured to configure sending resources of the dedicated uplink signal.

A processor-readable storage medium is further provided in the embodiment of the present disclosure, storing a computer program, where the computer program is configured to enable the processor to perform the method hereinabove.

An embodiment of the present disclosure further provides a chip, which includes a processor and a communication interface, where the communication interface is coupled to the processor, and the processor is used to run a program or instruction to perform the method described above.

The embodiments of the present disclosure also provide a computer program/program product, where the computer program/program product is stored in a storage medium and is executed by at least one processor to perform the above method.

The present disclosure has at least the following beneficial effects:
According to the indication method, terminal and network-side device of the embodiments of the present disclosure, when the terminal successfully accesses the target cell according to the Layer 1 command and/or Layer 2 command, the first indication information indicating that the terminal has successfully accessed the target cell is sent to the network-side device; or uplink data is sent to the network-side device, and the uplink data implicitly indicates that the terminal has successfully accessed the target cell, thereby improving the process of L1/L2 command triggering mobility management (including service cell change/addition/handover), so that the terminal and the network-side behavior are consistent, and the probability of successful handover is improved.

### BRIEF DESCRIPTION OF THE DRAWINGS

FIG.1 is a block diagram of a wireless communication system to which the embodiments of the present disclosure may be applied;
FIG.2 is a first flowchart of the indication method in an embodiment of the present disclosure;
FIG.3 is a second flowchart of the indication method in an embodiment of the present disclosure;
FIG.4 is a first structural view of a terminal provided in an embodiment of the present disclosure;
FIG.5 is a second structural view of a terminal in an embodiment of the present disclosure;
FIG.6 is a first structural view of a network-side device in an embodiment of the present disclosure; and
FIG.7 is a second structural view of a network-side device in an embodiment of the present disclosure.

### DETAILED DESCRIPTION

In order to make the technical problems, technical solutions and advantages to be solved by the present disclosure more clear, a detailed description will be given below with reference to the accompanying drawings and specific embodiments.

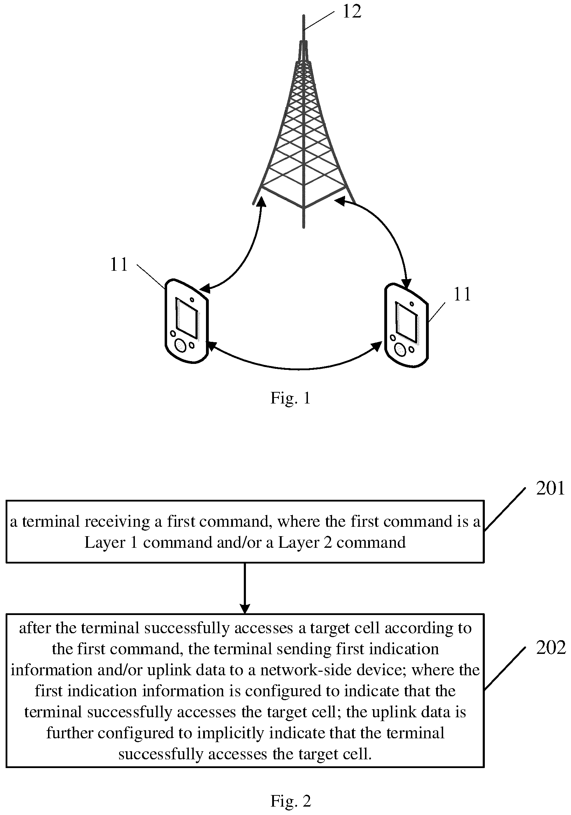

FIG.1 shows a block diagram of a wireless communication system applicable to the embodiments of the present disclosure. The wireless communication system includes a terminal device 11 and a network-side device 12. The terminal device 11 may also be referred to as a terminal or a user terminal (UE). It should be noted that the specific type of the terminal 11 is not limited in the embodiments of the present disclosure. The network-side device 12 may be a base station or a core network. It should be noted that in the embodiments of the present disclosure, only a base station in a New Radio (NR) system is used as an example, but the specific type of the base station is not limited.

In the present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects before and after are in an "or" relationship.

The "a plurality of" in the present disclosure refers to two or more than two, and other quantifiers are similar thereto.

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by ordinary technicians in this field without creative work are within the scope of protection of the present disclosure.

The embodiments of the present disclosure can be applicable to a variety of systems, especially 5G systems. For example, the applicable systems can be the Global System of Mobile communication (GSM) system, the Code Division Multiple Access (CDMA) system, the Wideband Code Division Multiple Access (WCDMA) General Packet Radio Service (GPRS) system, the Long Term Evolution (LTE) system, the LTE Frequency Division Duplex (FDD) system, the LTE Time Division Duplex (TDD) system, the Long Term Evolution Advanced (LTE-A) system, the Universal Mobile Telecommunication System (UMTS), the Worldwide interoperability for Microwave Access (WiMAX) system, the 5G New Radio (NR) system, etc. These various systems include terminal devices and network devices. The system may also include core network parts, such as the Evolved Packet System (EPS), 5G System (5GS), etc.

The terminal device of the present disclosure may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a wireless access network. For example, personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile station, a remote station, an access point, a remote terminal device, an access terminal device, a user terminal device, a user agent, and a user device, but is not limited in the embodiments of the present disclosure.

The network side device of the present disclosure may be a base station, which may include multiple cells providing services for terminals. Depending on the specific application scenario, the base station may also be called an access point, or may be a device in an access network that communicates with a wireless terminal device through one or more sectors on an air interface, or may be another name. The network device may be used to interchange received air frames with Internet Protocol (IP) packets, and serve as a router between the wireless terminal device and the rest of the access network, where the rest of the access network may include an Internet Protocol (IP) communication network. The network device may also coordinate the attribute management of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolutionary network device ( eNB or e-NodeB) in the long term evolution (LTE) system, a 5G base station (gNB) in the 5G network architecture (5th Generation system), or a home evolved Node B (HeNB), a relay node, a home base station (femto), a pico base station (pico), etc., which is not limited in the embodiments of the present disclosure. In some network structures, the network device may include a centralized unit (CU) node and a distributed unit (DU) node, and the centralized unit and the distributed unit may also be arranged geographically separately.

Network devices and terminal devices can each use one or more antennas for multiple input multiple output (MIMO) transmission. MIMO transmission can be single user MIMO (SU-MIMO) or multi-user MIMO (MU-MIMO). Depending on the form and number of antenna combinations, MIMO transmission can be two-dimensional multiple input multiple output (2D-MIMO), three-dimensional multiple input multiple output (3D-MIMO), full-dimensional multiple input multiple output (FD-MIMO) or massive multiple input multiple output (massive-MIMO), or it can be diversity transmission, precoded transmission or beamforming transmission, etc.

As shown in FIG2, an embodiment of the present disclosure provides an indication method, including:
Step 201: a terminal receiving a first command, where the first command is a Layer 1 command and/or a Layer 2 command;
Step 202: after the terminal successfully accesses a target cell according to the first command, the terminal sending first indication information and/or uplink data to a network-side device; where the first indication information is configured to indicate that the terminal successfully accesses the target cell; the uplink data is further configured to implicitly indicate that the terminal successfully accesses the target cell..

Optionally, in an embodiment of the present disclosure, after the terminal successfully accesses the target cell, the terminal may only send a first indication message to the network-side device; or, the terminal sends both the first indication message and uplink data to the network-side device, or the terminal only sends uplink data to the network-side device; it should be noted that the first indication message and the above-mentioned uplink data may be sent simultaneously or separately, and no specific limitation is made here; or, if the terminal side happens to have uplink scheduling data to be sent, it may implicitly indicate that the terminal has successfully accesses the target cell only by sending uplink data, that is, if the network-side device receives the uplink data, it indicates that the terminal has successfully accesses the target cell; if there is no uplink scheduling data to be sent at this time, the first indication message may be sent to indicate that the terminal has successfully accesses the target cell.

As an optional embodiment, the first command is configured to instruct the terminal to perform at least one of the following operations:
change of primary cell;
cell handover;
change of primary and secondary cells (PSCell);
Primary and secondary cells (PSCell) are added;
addition of secondary cell;
change of secondary cell.

Correspondingly, the first command can be called: L1 and/or L2 switching command, or L1 and/or L2 PCell change command, or L1 and/or L2 PSCell change command, or L1 and/or L2 PSCell add command, or L1 and/or L2 SCell change command, or L1 and/or L2 SCell add command, and no specific limitation is made here.

As another optional embodiment, the first indication information includes at least one of the following:
uplink radio resource control (RRC) message;
uplink Control Information (UCI);
uplink media access control layer control element (Media Access Control Control Element, MAC CE);

The preconfigured dedicated uplink signal is a dedicated uplink signal for a target cell that is preconfigured by the network to the terminal.

Optionally, when the first indication information is a preconfigured dedicated uplink signal, the method further includes:
the terminal receiving configuration information of a dedicated uplink signal for the target cell sent by the network-side device before receiving the first command; or the terminal obtaining configuration information of a dedicated uplink signal for the target cell sent by the network-side device in the first command;
where the terminal determining a sending resource of the dedicated uplink signal according to the configuration information of the dedicated uplink signal.

As yet another optional embodiment, the uplink data is carried by at least one of the following:
Physical uplink Share Channel (PUSCH) scrambled by the terminal's Cell-Radio Network Temporary Identifier (C-RNTI);
Uplink Share Channel ( UL -SCH).

In at least one embodiment of the present disclosure, the first indication information includes at least one of the following information:
Terminal identifier, for example, the terminal identifier may be a C-RNTI or other UE-specific identifier;
target cell identifier;
indication of successful access to the target cell;
beam index;
Transmission Configuration Indication (TCI) identifier.

In at least one embodiment of the present disclosure, the terminal sending the first indication information to the network-side device in step 202 includes at least one of the following:
the terminal directly sending the first indication information on a pre-configured uplink resource;
the terminal sending the first indication information on a pre-configured uplink resource activated by a first DCI scrambled by a C-RNTI;
the terminal sending the first indication information on an uplink resource scheduled by a second DCI scrambled by a C-RNTI;
the terminal sending the first indication information on an uplink resource obtained in a random access process; where the random access process includes: a contention random access process or a non-contention random access process;
the terminal sending the first indication information on an uplink resource applied through an uplink scheduling request (SR);
the uplink resource includes: a physical uplink control channel (PUCCH) resource and/or a physical uplink shared channel (PUSCH) resource.

As an optional embodiment, the method further includes:
the terminal determining the pre-configured uplink resource according to first resource configuration information received before receiving the first command;
   or,
the terminal determining the pre-configured uplink resource according to first resource configuration information carried by the first command;
where the first resource configuration information is configured to provide the pre-configured uplink resource for the terminal.

As another optional embodiment, when the random access process is a non-contention random access, the method further includes:
the terminal determining, according to second resource configuration information received before receiving the first command, a preconfigured random access channel (RACH) resource, and initiating the non-contention random access process on the preconfigured RACH resource;
   or,
the terminal determining, according to second resource configuration information carried by the first command, a preconfigured RACH resource, and initiating the non-contention random access process on the preconfigured RACH resource;
where the second resource configuration information is configured to pre-configure the RACH resource.

As yet another optional embodiment, the method further includes:
the terminal sending an SR to the network-side device, where the SR is configured to apply for an uplink resource for sending the first indication information;
the terminal receiving third resource configuration information sent by the network-side device; where the third resource configuration information is configured to configure uplink resources for the terminal to send the first indication information.

As yet another optional embodiment, before the terminal sends the SR to the network-side device, the method includes:
the terminal receiving fourth resource configuration information sent by the network-side device before receiving the first command, or the terminal obtaining fourth resource configuration information sent by the network-side device in the first command;
the terminal determining, according to the fourth resource configuration information, a pre-configured SR resource for sending the SR;
where the fourth resource configuration information is configured to pre-configure the SR resource.

In summary, in the embodiments of the present disclosure, when the terminal successfully accesses the target cell according to the Layer 1 command and/or the Layer 2 command, the first indication information indicating that the terminal has successfully accesses the target cell is sent to the network-side device; or uplink data is sent to the network-side device, and the uplink data implicitly indicates that the terminal has successfully accesses the target cell, thereby improving the process of L1/L2 command triggering mobility management (including service cell change/addition/switching), so that the terminal and the network-side behavior are consistent, thereby improving the probability of successful switching.

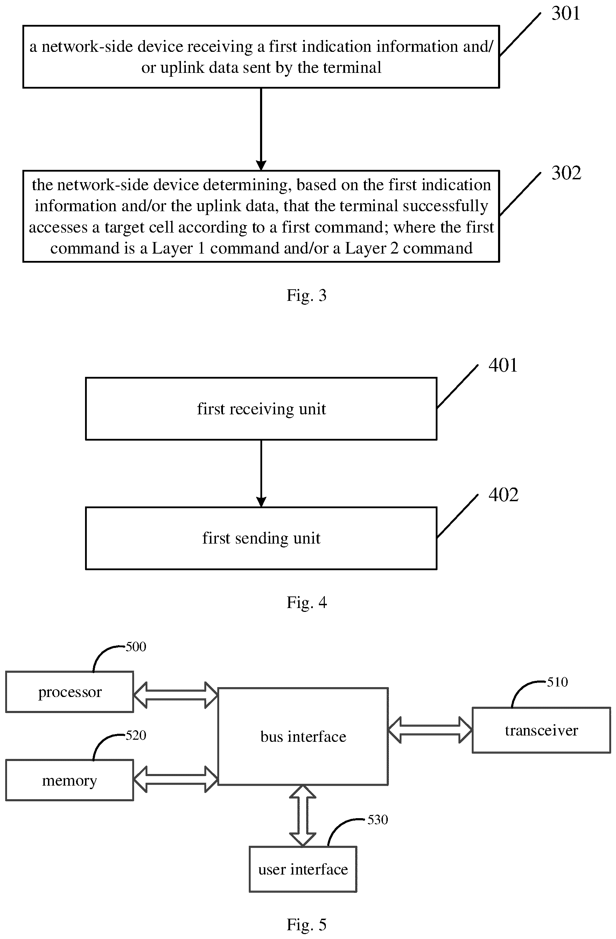

As shown in FIG3, the embodiment of the present disclosure further provides an indication method, which includes:
Step 301: a network-side device receiving a first indication information and/or uplink data sent by the terminal;
Step 302: the network-side device determining, based on the first indication information and/or the uplink data, that the terminal successfully accesses a target cell according to a first command; where the first command is a Layer 1 command and/or a Layer 2 command.

Optionally, before receiving the first indication information and/or uplink data, the network-side device further includes: the network-side device sends a first command to the terminal, and the first command is a Layer 1 command and/or a Layer 2 command.

Optionally, in the disclosed embodiment, after the terminal successfully accesses the target cell, the terminal may only send the first indication information to the network-side device; or, the terminal may send both the first indication information and the uplink data to the network-side device; or, the terminal may only send the uplink data to the network-side device. It should be noted that the first indication information and the above-mentioned uplink data may be sent at the same time or separately, and no specific limitation is made here; or, if the terminal side happens to have uplink scheduling data to be sent, it may only implicitly indicate that the terminal has successfully accesses the target cell by sending the uplink data, that is, the network-side device receives the uplink data, which indicates that the terminal has successfully accesses the target cell; if there is no uplink scheduling data to be sent at this time, the first indication information may be sent to indicate that the terminal has successfully accesses the target cell.

As an optional embodiment, the first command is configured to instruct the terminal to perform at least one of the following operations:
change of primary cell;
cell handover;
change of primary and secondary cells;
addition of primary and secondary cells;
addition of secondary cell;
change of secondary cell.

Correspondingly, the first command can be called: L1 and/or L2 switching command, or L1 and/or L2 PCell change command, or L1 and/or L2 PSCell change command, or L1 and/or L2 PSCell add command, or L1 and/or L2 SCell change command, or L1 and/or L2 SCell add command, and no specific limitation is made here.

As another optional embodiment, the first indication information includes at least one of the following:
uplink radio resource control (RRC) message;
uplink control information (UCI);
uplink media access control control element (MAC CE);
the preconfigured dedicated uplink signal is a dedicated uplink signal for a target cell that is preconfigured by the network to the terminal.

Optionally, when the first indication information is a preconfigured dedicated uplink signal, the method further includes:
sending configuration information for the dedicated uplink signal for the target cell to the terminal before sending the first command; or, sending to the terminal the first command carrying configuration information for the dedicated uplink signal for the target cell;
where the configuration information of the dedicated uplink signal is configured to configure sending resources of the dedicated uplink signal.

As yet another optional embodiment, the uplink data is carried by at least one of the following:
a physical uplink shared channel (PUSCH) scrambled through a cell-radio network temporary identifier (C-RNTI) of the terminal;
uplink shared channel (UL-SCH).

In at least one embodiment of the present disclosure, the first indication information includes at least one of the following information:
terminal identifier, for example, the terminal identifier may be C-RNTI or other UE's exclusive identifier;
target cell identifier;
indication of successful access to the target cell;
beam index;
transmission configuration indication (TCI) identifier.

In at least one embodiment of the present disclosure, when the first indication information includes: a beam index and/or a TCI identifier, the method further includes:
the network-side device performs data transmission according to the beam index and/or the beam indicated by the TCI identifier; for example, sends downlink data and/or receives uplink data.

In at least one embodiment of the present disclosure, in step 301, the network-side device receives the first indication information sent by the terminal, including:
the network-side device receiving the first indication information which is sent by the terminal on a preconfigured uplink resource;
the network-side device receiving the first indication information which is sent by the terminal on a pre-configured uplink resource activated by first DCI scrambled by a C-RNTI;
the network-side device receiving the first indication information which is sent by the terminal on an uplink resource scheduled by second DCI scrambled by a C-RNTI;
the network-side device receiving the first indication information which is sent by the terminal on the uplink resource obtained in the random access process; where the random access process includes: a contention random access process or a non-contention random access process;
the network-side device receiving the first indication information which is sent by the terminal on the uplink resource applied through an uplink scheduling request (SR);
where the uplink resource includes: a physical uplink control channel (PUCCH) resource and/or a physical uplink shared channel (PUSCH) resource.

As an optional embodiment, the method further includes:
the network-side device sending first resource configuration information to the terminal before sending the first command;
   or,
the network-side device sending a first command carrying first resource configuration information to the terminal;
where the first resource configuration information is configured to provide the pre-configured uplink resource to the terminal.

As another optional embodiment, when the random access process is a non-contention random access, the method further includes:
the network-side device sending second resource configuration information to the terminal before sending the first command;
   or,
the network-side device sending a first command carrying second resource configuration information to the terminal;
where the second resource configuration information is configured to pre-configure a random access channel (RACH) resource.

As yet another optional embodiment, the method further includes:
the network-side device receiving the uplink scheduling request (SR) sent by the terminal, where the SR is configured to apply for an uplink resource for sending the first indication information;
the network-side device sending third resource configuration information to the terminal according to the SR;
where the third resource configuration information is configured to pre-configure uplink resources for the terminal to send the first indication information.

Optionally, before the network-side device receives an uplink scheduling request (SR) sent by the terminal, the method further includes:
the network-side device sending fourth resource configuration information to the terminal before sending the first command, or the network-side device carrying the fourth resource configuration information in the first command; where the fourth resource configuration information is configured to configure a pre-configured SR resource for sending an SR.

In summary, in the embodiments of the present disclosure, when the terminal successfully accesses the target cell according to the Layer 1 command and/or the Layer 2 command, the first indication information indicating that the terminal has successfully accesses the target cell is sent to the network-side device; or uplink data is sent to the network-side device, and the uplink data implicitly indicates that the terminal has successfully accesses the target cell, thereby improving the process of L1/L2 command triggering mobility management (including service cell change/addition/switching), so that the terminal and the network-side behavior are consistent, thereby improving the probability of successful switching.

In order to more clearly describe the indication method provided by the embodiment of the present disclosure, several examples are provided below for illustration.

In the first embodiment, the UE side indicates the network-side that the UE switching is successful through an uplink RRC message, and/or UCI, and/or uplink MAC CE, and/or C-RNTI scrambled PUSCH, and/or UL-SCH;
Example 1: In the case where the network preconfigures uplink resources (PUCCH or PUSCH resources) for sending the first indication information, the UE side sends an uplink RRC message to indicate to the network-side that the UE handover is successful;
It should be noted that this example takes the UE sending an uplink RRC message as an example, and other methods (UCI and/or uplink MAC CE) are similar to the uplink RRC message.
Step 0: Optionally, the network-side sends a pre-configured dedicated uplink resource for the UE to send an uplink RRC message to the UE, where the dedicated uplink resource may be a PUCCH or PUSCH resource;
Step 1: The network-side sends an L1 command and/or an L2 command (which may be referred to as an L1L2 command for short); optionally, the L1L2 command carries a dedicated uplink resource configured by the network for the UE to send an uplink RRC message to the UE, and the dedicated uplink resource may be a PUCCH or PUSCH resource;
Step 2: The UE receives the L1L2 command sent by the network-side, and changes or adds a serving cell based on the L1L2 command;
Step 3a: Optionally, after the UE successfully completes the serving cell change or addition based on the L1L2 command, the UE directly sends an uplink RRC message on the uplink resources preconfigured by the network, and the uplink RRC message includes at least one of the following information:
   UE identifier;
   Serving cell identifier;
   Successful switching indication information;
   The beam index selected/applied by the UE;
   The TCI selected/applied by the UE;
Step 3b: Optionally, after the UE successfully completes the service cell change or addition based on the L1L2 command, it monitors the PDCCH sent by the network-side. After receiving the DCI activation indication encrypted by the C-RNTI, the UE sends an uplink RRC message on the pre-configured PUCCH or PUSCH resource corresponding to the DCI activation, and the uplink RRC message includes at least one of the following information:
   UE identifier;
   Serving cell identifier;
   Successful switching indication information;
   The beam index selected/applied by the UE;
   TCI identifier selected/applied by the UE.

Optionally, when sending the uplink RRC message, the UE also carries a buffer status report BSR and/or uplink scheduling data (C-RNTI-scrambled PUSCH and/or UL-SCH).
Step 4: The network-side receives an uplink RRC message sent by the UE, and determines, based on the RRC message, that the UE has successfully accesses the cell;
Step 5: Optionally, in the case where the RRC message carries the beam index or TCI identifier selected/applied by the UE, the network-side starts to use the beam index or the beam indicated by the TCI identifier to send downlink data and/or receive uplink data based on the beam index or TCI identifier carried by the first indication information.

Example 2: For a case where the network preconfigures uplink resources (PUCCH or PUSCH resources) for sending the first indication information, and there happens to be uplink data to be sent, the UE sends uplink data to indicate to the network-side that the UE switching is successful:
Step 0: Optionally, the network-side sends a pre-configured dedicated uplink resource for the UE to send an uplink RRC message to the UE, where the dedicated uplink resource may be a PUCCH or PUSCH resource;
Step 1: The network-side sends an L1L2 command. Optionally, the L1L2 command carries a dedicated uplink resource configured by the network for the UE to send an uplink RRC message to the UE. The dedicated uplink resource may be a PUCCH or PUSCH resource.
Step 2: The UE receives the L1L2 command sent by the network-side, and changes or adds a serving cell based on the L1L2 command;
Step 3a: Optionally, when the UE successfully completes the change or addition of the serving cell based on the L1L2 command, and the UE side happens to have uplink data to be sent, the UE directly sends the uplink data on the uplink resources pre-configured by the network, that is, the C-RNTI-scrambled PUSCH and/or UL-SCH;
Step 3b: Optionally, when the UE successfully completes the service cell change or addition based on the L1L2 command, it monitors the PDCCH sent by the network-side. After receiving the C-RNTI-scrambled DCI activation indication, and when the UE side has uplink data to send, the UE directly sends the uplink data on the uplink resources pre-configured by the network, i.e., the C-RNTI-scrambled PUSCH and/or UL-SCH;
Step 4: After the network-side receives the uplink data sent by the UE, it can be considered that the UE has successfully accesses the cell.

The above-mentioned Example 1 and Example 2 can be used in combination. For example, when the UE just has data to send, the method of Example 2 is adopted, and when the UE has no data to send, the method of Example 1 is adopted.

Example 3: For the SR resource pre-configured by the network for the PUCCH or PUSCH resource for the UE to apply for sending the first indication information, the UE side sends an uplink RRC message to indicate that the UE handover is successful on the network-side;
Step 0: Optionally, the network-side sends a pre-configured SR resource for the UE to apply for an uplink resource for sending the first indication information;
Step 1: The network-side sends an L1L2 command. Optionally, the L1L2 command carries an SR resource configured by the network for the UE to apply for an uplink resource for sending the first indication information;
Step 2: The UE receives a command sent by the network-side, and changes or adds a serving cell based on the L1L2 command;
Step 2a: When the UE successfully completes the serving cell change or addition based on the L1L2 command, and the SR resources pre-configured by the network are sufficient, the UE sends a corresponding SR request to the network on the SR resources pre-configured by the network;
Step 2b: The network configures corresponding PUCCH or PUSCH resources for the UE based on the SR request and sends it to the UE;
Step 2c: The UE monitors the PDCCH and, after receiving the C-RNTI-scrambled DCI, sends an uplink RRC message on the PUCCH or PUSCH resource scheduled by the corresponding DCI, where the uplink RRC message includes at least one of the following information:
   UE identifier;
   Serving cell identifier;
   Successful handover indication information;
   The beam index selected/applied by the UE;
   The TCI identifier selected/applied by the UE;

Optionally, when sending the uplink RRC message, the UE also carries the BSR and/or uplink scheduling data (C-RNTI-scrambled PUSCH and/or UL-SCH).
Step 3: The network-side receives an uplink RRC message sent by the UE, and determines, based on the RRC message, that the UE has successfully accesses the cell;
Step 4: Optionally, in the case where the RRC message carries the beam index or TCI identifier selected/applied by the UE, the network-side starts to use the beam index or the beam indicated by the TCI identifier to send downlink data and/or receive uplink data based on the beam index or TCI identifier carried by the first indication information.

Example 4: For a case where the network preconfigures SR resources for the PUCCH or PUSCH resources for the UE to apply for sending the first indication information, and there happens to be uplink data to be sent, the UE sends uplink data to indicate to the network-side that the UE switching is successful:
Step 0: Optionally, the network-side sends a pre-configured SR resource for the UE to apply for an uplink resource for sending the first indication information;
Step 1: The network-side sends an L1L2 command. Optionally, the L1L2 command carries an SR resource configured by the network for the UE to apply for an uplink resource for sending the first indication information;
Step 2: The UE receives the L1L2 command sent by the network-side, and changes or adds a serving cell based on the L1L2 command;
Step 2a: When the UE successfully completes the change or addition of the serving cell based on the L1L2 command, and the SR resources pre-configured by the network are sufficient, and optionally, when there is uplink data to be sent on the UE side, the UE sends a corresponding SR request to the network on the SR resources pre-configured by the network;
Step 2b: The network configures corresponding PUCCH or PUSCH resources for the UE based on the SR request and sends it to the UE;
Step 2c: The UE monitors the PDCCH, and after receiving the C-RNTI-scrambled DCI, and optionally, when the UE side has uplink data to be sent, the UE directly sends the uplink data on the PUCCH or PUSCH resources scheduled by the corresponding DCI in the network;
Step 4: After the network-side receives the uplink data sent by the UE, it can be considered that the UE has successfully accesses the cell.

Example 5: When the network does not pre-configure any uplink resources, or the network pre-configures uplink PUCCH, PUSCH or SR resources, but the resources are insufficient, the UE initiates a random access process to obtain uplink resources, and sends a first indication information on the uplink resources to indicate that the UE switching on the network-side is successful:
Step 0: Optionally, the network-side sends pre-configured RACH resources;
Step 1: The network-side sends an L1L2 command, and optionally, the L1L2 command carries a pre-configured RACH resource;
Step 2: The UE receives a command sent by the network-side, and changes or adds a serving cell based on the L1L2 command;

When the UE side does not obtain any pre-configured uplink PUCCH, PUSCH or SR resources, or the network-side pre-configures SR resources for the UE to apply for PUCCH or PUSCH resources for sending the first indication information, but the SR resources are insufficient, or when the network-side pre-configures PUCCH or PUSCH resources for the UE to send the first indication information, but the resources are insufficient;
Step 3a: Optionally, when there are pre-configured RACH resources on the UE side, the UE initiates non-contention random access;
Step 3b: Optionally, when there is no pre-configured RACH resource on the UE side, the UE initiates contention random access;
Step 4: The UE obtains the uplink PUCCH or uplink PUSCH resources configured by the network-side during the random access process, and sends a corresponding first indication message to the network on the resources. The first indication message may include at least one of the following:
   uplink RRC message, uplink UCI, uplink MAC CE, C-RNTI scrambled PUSCH, UL-SCH;

In the case of sending an uplink RRC message, an uplink UCI, or an uplink MAC CE, the uplink RRC message, the uplink UCI, or the uplink MAC CE includes at least one of the following information:
UE identifier;
Serving cell identifier;
Successful switching indication information;
The beam index selected/applied by the UE;
The TCI identifier selected/applied by the UE;

Optionally, when sending the uplink RRC message, the UE also carries the BSR and/or uplink scheduling data (C-RNTI scrambled PUSCH and/or UL-SCH).

The case of sending C-RNTI-scrambled PUSCH and UL-SCH occurs when and only when the UE side has uplink data to send.
Step 5: The network-side receives the first indication message sent by the UE, and determines, according to the first indication message, that the UE has successfully accesses the cell;
Step 6: Optionally, in the case where the RRC message carries the beam index or TCI identifier selected/applied by the UE, the network-side starts to use the beam index or the beam indicated by the TCI identifier to send downlink data and/or receive uplink data based on the beam index or TCI identifier carried by the first indication information.

Example 6: After the UE completes the corresponding serving cell change or addition based on the L1L2 command, it waits for the network-side to schedule and sends the corresponding first indication information on the PUCCH or PUSCH resources scheduled by the network-side:
Step 1: The network-side sends L1L2 commands;
Step 2a: The UE receives a command sent by the network-side, and changes or adds a serving cell based on the L1L2 command;
Step 2b: After the UE accesses the target cell, it monitors the PDCCH on the target cell, and after receiving the DCI scrambled by the C-RNTI, it sends a first indication message to the network on the PUCCH or PUSCH resource scheduled by the corresponding DCI, where the first indication message may include at least one of the following:
   uplink RRC message, uplink UCI, uplink MAC CE, C-RNTI scrambled PUSCH, UL-SCH;

In the case of sending an uplink RRC message, an uplink UCI, or an uplink MAC CE, the uplink RRC message, the uplink UCI, or the uplink MAC CE includes at least one of the following information:
UE identifier;
Serving cell identifier;
Successful switching indication information;
The beam index selected/applied by the UE;
The TCI identifier selected/applied by the UE;

Optionally, when sending the uplink RRC message, the UE also carries the BSR and/or uplink scheduling data (C-RNTI-scrambled PUSCH and/or UL-SCH).

The case of sending C-RNTI-scrambled PUSCH and UL-SCH occurs when and only when the UE side has uplink data to send.
Step 3: The network-side receives a first indication message sent by the UE, and determines, according to the first indication message, that the UE has successfully accesses the cell;
Step 4: Optionally, in the case where the RRC message carries the beam index or TCI identifier selected/applied by the UE, the network-side starts to use the beam index or the beam indicated by the TCI identifier to send downlink data and/or receive uplink data based on the beam index or TCI identifier carried by the first indication information.

In the second embodiment, the UE side indicates to the network-side that the UE switching is successful through an uplink dedicated signal
Step 0: Optionally, the network-side sends a pre-configured dedicated uplink signal, where the dedicated uplink signal is a dedicated uplink signal for the target cell that is configured in advance by the network to the UE;
Step 1: The network-side sends an L1L2 command. Optionally, the L1L2 command carries a pre-configured dedicated uplink signal, where the dedicated uplink signal is a dedicated uplink signal for the target cell that is configured in advance by the network to the UE;
Step 2: The UE changes or adds a serving cell based on the L1L2 command sent by the network-side;
Step 3: After the UE successfully accesses the target cell, the UE sends a dedicated uplink signal based on the dedicated uplink signal preconfigured by the network-side;
Step 4: The network-side detects the uplink signal. When the network detects the dedicated uplink signal, it determines that the UE has successfully accesses the cell.
disclosed embodiment, after the terminal successfully accesses the target cell according to the Layer 1 command and/or the Layer 2 command, the first indication information indicating the successful access of the terminal to the target cell is sent to the network-side device; or uplink data is sent to the network-side device, and the uplink data implicitly indicates that the terminal has successfully accesses the target cell, thereby improving the process of triggering mobility management (including service cell change/addition/switching) by L1/L2 commands, so that the terminal and the network-side behave in the same way, thereby improving the probability of successful switching.

As shown in FIG4, the present disclosure also provides a terminal, including:
a first receiving unit 401, configured to receive a first command, where the first command is a Layer 1 command and/or a Layer 2 command;
a first sending unit 402, configured to, after the terminal successfully accesses a target cell according to the first command, send first indication information and/or uplink data to a network-side device; where the first indication information is configured to indicate that the terminal successfully accesses the target cell; the uplink data is further configured to implicitly indicate that the terminal successfully accesses the target cell.

Optionally, the first command is configured to instruct the terminal to perform at least one of the following operations:
change of primary cell;
cell handover;
change of primary and secondary cells;
addition of primary and secondary cells;
addition of secondary cell;
change of secondary cell.

Optionally, the first indication information includes at least one of the following:
uplink radio resource control (RRC) message;
uplink control information (UCI);
uplink media access control control element (MAC CE);
pre-configured dedicated uplink signal.

Optionally, the uplink data is carried by at least one of the following:
a physical uplink shared channel (PUSCH) scrambled through a cell-radio network temporary identifier (C-RNTI) of the terminal;
uplink shared channel (UL-SCH).

Optionally, the first indication information includes at least one of the following information:
terminal identifier;
target cell identifier;
indication of successful access to the target cell;
beam index;
transmission configuration indication (TCI) identifier.

Optionally, first sending unit is configured to perform at least one of the following:
directly sending the first indication information on a pre-configured uplink resource;
sending the first indication information on a pre-configured uplink resource activated by a first DCI scrambled by a C-RNTI;
sending the first indication information on an uplink resource scheduled by a second DCI scrambled by a C-RNTI;
sending the first indication information on an uplink resource obtained in a random access process; where the random access process includes: a contention random access process or a non-contention random access process;
sending the first indication information on an uplink resource applied through an uplink scheduling request (SR);
the uplink resource includes: a physical uplink control channel (PUCCH) resource and/or a physical uplink shared channel (PUSCH) resource.

Optionally, the terminal further includes:
a first resource determining unit, configured to
determine the pre-configured uplink resource according to first resource configuration information received before receiving the first command;
   or,
determine the pre-configured uplink resource according to first resource configuration information carried by the first command;
where the first resource configuration information is configured to provide the pre-configured uplink resource for the terminal.

Optionally, when the random access process is a non-contention random access, the terminal further includes: a second resource determining unit configured to
determine, according to second resource configuration information received before receiving the first command, a preconfigured random access channel (RACH) resource, and initiate the non-contention random access process on the preconfigured RACH resource;
   or,
determine, according to second resource configuration information carried by the first command, a preconfigured RACH resource, and initiate the non-contention random access process on the preconfigured RACH resource;
where the second resource configuration information is configured to pre-configure the RACH resource.

Optionally, the terminal further includes:
a SR sending unit configured to send an SR to the network-side device, where the SR is configured to apply for an uplink resource for sending the first indication information;
an information obtaining unit, configured to receive third resource configuration information sent by the network-side device;
where the third resource configuration information is configured to configure uplink resources for the terminal to send the first indication information.

Optionally, the terminal further includes:
an applying unit, configured to receive fourth resource configuration information sent by the network-side device before receiving the first command, or obtain fourth resource configuration information sent by the network-side device in the first command;
a third resource determining unit, configured to determine, according to the fourth resource configuration information, a pre-configured SR resource for sending the SR;
where the fourth resource configuration information is configured to pre-configure the SR resource.

Optionally, when the first indication information is a preconfigured dedicated uplink signal, the terminal further includes:
a configuration receiving unit, configured to receive configuration information of a dedicated uplink signal for the target cell sent by the network-side device before receiving the first command; or obtain configuration information of a dedicated uplink signal for the target cell sent by the network-side device in the first command;
a fourth resource determining unit, configured to determine a sending resource of the dedicated uplink signal according to the configuration information of the dedicated uplink signal.

According to the embodiment of the present disclosure, after the terminal successfully accesses the target cell according to the Layer 1 command and/or the Layer 2 command, the first indication information indicating the successful access of the terminal to the target cell is sent to the network-side device; or uplink data is sent to the network-side device, and the uplink data implicitly indicates that the terminal has successfully accesses the target cell, thereby improving the process of triggering mobility management (including service cell change/addition/switching) by L1/L2 commands, so that the terminal and the network-side behave in the same way, thereby improving the probability of successful switching.

It should be noted that the terminal provided in the embodiments of the present disclosure is a terminal capable of executing the above-mentioned indication method, and all embodiments of the above-mentioned indication method are applicable to the terminal and can achieve the same or similar beneficial effects.

As shown in FIG.5, the embodiment of the present disclosure further provides a terminal, including a memory 520, a transceiver 510, and a processor 500:
the memory 520 is configured to store a computer program; the transceiver 510 is configured to transmit and receive data under a control of the processor 500; and the processor 500 is configured to read the computer program in the memory 520 to perform:
receiving a first command, where the first command is a Layer 1 command and/or a Layer 2 command;
after the terminal successfully accesses a target cell according to the first command, sending first indication information and/or uplink data to a network-side device; where the first indication information is configured to indicate that the terminal successfully accesses the target cell; the uplink data is further configured to implicitly indicate that the terminal successfully accesses the target cell.

Optionally, the first command is configured to instruct the terminal to perform at least one of the following operations:
change of primary cell;
cell handover;
change of primary and secondary cells;
addition of primary and secondary cells;
addition of secondary cell;
change of secondary cell.

Optionally, the first indication information includes at least one of the following:
uplink radio resource control (RRC) message;
uplink control information (UCI);
uplink media access control control element (MAC CE);
pre-configured dedicated uplink signal.

Optionally, the uplink data is carried by at least one of the following:
a physical uplink shared channel (PUSCH) scrambled through a cell-radio network temporary identifier (C-RNTI) of the terminal;
uplink shared channel (UL-SCH).

Optionally, the first indication information includes at least one of the following information:
terminal identifier;
target cell identifier;
indication of successful access to the target cell;
beam index;
transmission configuration indication (TCI) identifier.

Optionally, the processor is further configured to read the computer program in the memory to perform at least one of the following:
directly sending the first indication information on a pre-configured uplink resource;
sending the first indication information on a pre-configured uplink resource activated by a first DCI scrambled by a C-RNTI;
sending the first indication information on an uplink resource scheduled by a second DCI scrambled by a C-RNTI;
sending the first indication information on an uplink resource obtained in a random access process; where the random access process includes: a contention random access process or a non-contention random access process;
sending the first indication information on an uplink resource applied through an uplink scheduling request (SR);
the uplink resource includes: a physical uplink control channel (PUCCH) resource and/or a physical uplink shared channel (PUSCH) resource.

Optionally, the processor is further configured to read the computer program in the memory to perform:
determining the pre-configured uplink resource according to first resource configuration information received before receiving the first command;
   or,
determining the pre-configured uplink resource according to first resource configuration information carried by the first command;
where the first resource configuration information is configured to provide the pre-configured uplink resource for the terminal.

Optionally, when the random access process is a non-contention random access, the processor is further configured to read the computer program in the memory to perform
determining, according to second resource configuration information received before receiving the first command, a preconfigured random access channel (RACH) resource, and initiating the non-contention random access process on the preconfigured RACH resource;
   or,
determining, according to second resource configuration information carried by the first command, a preconfigured RACH resource, and initiating the non-contention random access process on the preconfigured RACH resource;
where the second resource configuration information is configured to pre-configure the RACH resource.

Optionally, the processor is further configured to read the computer program in the memory to perform:
sending an SR to the network-side device, where the SR is configured to apply for an uplink resource for sending the first indication information;
receiving third resource configuration information sent by the network-side device;
where the third resource configuration information is configured to configure uplink resources for the terminal to send the first indication information.

Optionally, the processor is further configured to read the computer program in the memory to perform:
receiving fourth resource configuration information sent by the network-side device before receiving the first command, or the terminal obtaining fourth resource configuration information sent by the network-side device in the first command;
determining, according to the fourth resource configuration information, a pre-configured SR resource for sending the SR;
where the fourth resource configuration information is configured to pre-configure the SR resource.

Optionally, when the first indication information is a preconfigured dedicated uplink signal, the processor is further configured to read the computer program in the memory to perform:
receiving configuration information of a dedicated uplink signal for the target cell sent by the network-side device before receiving the first command; or obtaining configuration information of a dedicated uplink signal for the target cell sent by the network-side device in the first command;
determining a sending resource of the dedicated uplink signal according to the configuration information of the dedicated uplink signal.

Among them, in Fig. 5, the bus architecture may include any number of interconnected buses and bridges, specifically one or more processors represented by processor 500 and various circuits of memory represented by memory 520 are linked together. The bus architecture can also link various other circuits such as peripherals, regulators, and power management circuits together, which are all well known in the art, so they are not further described herein. The bus interface provides an interface. The transceiver 510 can be a plurality of components, namely, a transmitter and a receiver, providing a unit for communicating with various other devices on a transmission medium, and these transmission media include transmission media such as wireless channels, wired channels, and optical cables. For different user devices, the user interface 530 can also be an interface that can be connected to external and internal devices, and the connected devices include but are not limited to keypads, displays, speakers, microphones, joysticks, etc.

The processor 500 is responsible for managing the bus architecture and general processing, and the memory 520 can store data used by the processor 500 when performing operations.

Optionally, the processor 500 may be a central processing unit (CPU), an application specific integrated circuit (ASIC), a field programmable gate array (FPGA) or a complex programmable logic device (CPLD), and the processor may also adopt a multi-core architecture.
execute any of the methods provided by the embodiments of the present disclosure according to the obtained executable instructions. The processor and the memory can also be arranged physically separately.

According to the embodiment of the present disclosure, after the terminal successfully accesses the target cell according to the Layer 1 command and/or the Layer 2 command, the first indication information indicating the successful access of the terminal to the target cell is sent to the network-side device; or uplink data is sent to the network-side device, and the uplink data implicitly indicates that the terminal has successfully accesses the target cell, thereby improving the process of triggering mobility management (including service cell change/addition/switching) by L1/L2 commands, so that the terminal and the network-side behave in the same way, thereby improving the probability of successful switching.

It should be noted that the terminal provided in the embodiments of the present disclosure is a terminal capable of executing the above-mentioned indication method, and all embodiments of the above-mentioned indication method are applicable to the terminal and can achieve the same or similar beneficial effects.

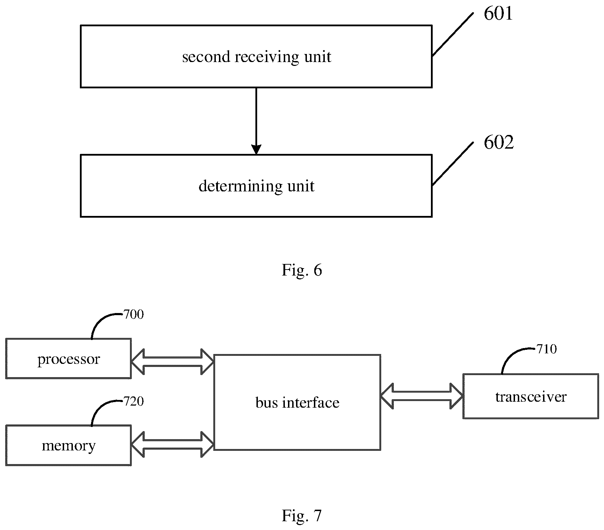

As shown in FIG.6, the embodiment of the present disclosure further provides a network-side device, including:
a second receiving unit 601, configured to receive a first indication information and/or uplink data sent by the terminal;
a determining unit 602, configured to determine, based on the first indication information and/or the uplink data, that the terminal successfully accesses a target cell according to a first command; where the first command is a Layer 1 command and/or a Layer 2 command.

Optionally, the first command is configured to instruct the terminal to perform at least one of the following operations:
change of primary cell;
cell handover;
change of primary and secondary cells;
addition of primary and secondary cells;
addition of secondary cell;
change of secondary cell.

Optionally, the first indication information includes at least one of the following:
uplink radio resource control (RRC) message;
uplink control information (UCI);
uplink media access control control element (MAC CE);
pre-configured dedicated uplink signal.

Optionally, the uplink data is carried by at least one of the following:
a physical uplink shared channel (PUSCH) scrambled through a cell-radio network temporary identifier (C-RNTI) of the terminal;
uplink shared channel (UL-SCH).

Optionally, the first indication information includes at least one of the following information:
terminal identifier;
target cell identifier;
indication of successful access to the target cell;
beam index;
transmission configuration indication (TCI) identifier.

Optionally, when the first indication information includes a beam index and/or a TCI identifier, the method further includes:
a data transmission unit, configured to transmit data according to a beam indicated by the beam index and/or the TCI identifier.

Optionally, the second receiving unit is configured to perform at least one of the following:
receiving the first indication information which is sent by the terminal on a preconfigured uplink resource;
receiving the first indication information which is sent by the terminal on a pre-configured uplink resource activated by first DCI scrambled by a C-RNTI;
receiving the first indication information which is sent by the terminal on an uplink resource scheduled by second DCI scrambled by a C-RNTI;
receiving the first indication information which is sent by the terminal on the uplink resource obtained in the random access process; where the random access process includes: a contention random access process or a non-contention random access process;
receiving the first indication information which is sent by the terminal on the uplink resource applied through an uplink scheduling request (SR);
where the uplink resource includes: a physical uplink control channel (PUCCH) resource and/or a physical uplink shared channel (PUSCH) resource.

Optionally, the network-side device further includes:
a third sending unit, configured to send first resource configuration information to the terminal before sending the first command;
   or,
send a first command carrying first resource configuration information to the terminal;
where the first resource configuration information is configured to provide the pre-configured uplink resource to the terminal.

Optionally, when the random access process is the non-contention random access, the network-side device further includes:
a fourth sending unit, configured to send second resource configuration information to the terminal before sending the first command;
   or,
send a first command carrying second resource configuration information to the terminal;
where the second resource configuration information is configured to pre-configure a random access channel (RACH) resource.

Optionally, the network-side device further includes:
a third receiving unit, configured to receive the uplink scheduling request (SR) sent by the terminal, where the SR is configured to apply for an uplink resource for sending the first indication information;
a fifth sending unit, configured to send third resource configuration information to the terminal according to the SR;
where the third resource configuration information is configured to pre-configure uplink resources for the terminal to send the first indication information.

Optionally, the network-side device further includes:
a sixth sending unit, configured to send fourth resource configuration information to the terminal before sending the first command, or carry the fourth resource configuration information in the first command; where the fourth resource configuration information is configured to configure a pre-configured SR resource for sending an SR.

Optionally, when the first indication information is the preconfigured dedicated uplink signal, the network-side device further includes:
a seventh sending unit, configured to send configuration information for the dedicated uplink signal for the target cell to the terminal before sending the first command; or, send to the terminal the first command carrying configuration information for the dedicated uplink signal for the target cell;
where the configuration information of the dedicated uplink signal is configured to configure sending resources of the dedicated uplink signal.

According to the embodiment of the present disclosure, after the terminal successfully accesses the target cell according to the Layer 1 command and/or the Layer 2 command, the first indication information indicating the successful access of the terminal to the target cell is sent to the network-side device; or uplink data is sent to the network-side device, and the uplink data implicitly indicates that the terminal has successfully accesses the target cell, thereby improving the process of triggering mobility management (including service cell change/addition/switching) by L1/L2 commands, so that the terminal and the network-side behave in the same way, thereby improving the probability of successful switching.

It should be noted that the network-side device provided in the embodiment of the present disclosure is a network-side device capable of executing the above-mentioned indication method, and all embodiments of the above-mentioned indication method are applicable to the network-side device and can achieve the same or similar beneficial effects.

As shown in FIG. 7, the embodiment of the present disclosure further provides a network-side device, including a memory 720, a transceiver 710, and a processor 700:
the memory 720 is configured to store a computer program; the transceiver 710 is configured to transmit and receive data under a control of the processor 700; and the processor 700 is configured to read the computer program in the memory 720 to perform:
receiving a first indication information and/or uplink data sent by the terminal;
determining, based on the first indication information and/or the uplink data, that the terminal successfully accesses a target cell according to a first command; where the first command is a Layer 1 command and/or a Layer 2 command.

Optionally, the first command is configured to instruct the terminal to perform at least one of the following operations:
change of primary cell;
cell handover;
change of primary and secondary cells;
addition of primary and secondary cells;
addition of secondary cell;
change of secondary cell.

Optionally, the first indication information includes at least one of the following:
uplink radio resource control (RRC) message;
uplink control information (UCI);
uplink media access control control element (MAC CE);
pre-configured dedicated uplink signal.

Optionally, the uplink data is carried by at least one of the following:
a physical uplink shared channel (PUSCH) scrambled through a cell-radio network temporary identifier (C-RNTI) of the terminal;
uplink shared channel (UL-SCH).

Optionally, the first indication information includes at least one of the following information:
terminal identifier;
target cell identifier;
indication of successful access to the target cell;
beam index;
transmission configuration indication (TCI) identifier.

Optionally, when the first indication information includes a beam index and/or a TCI identifier, processor is further configured to read the computer program in the memory to perform:
transmitting data according to a beam indicated by the beam index and/or the TCI identifier.

Optionally, the processor is further configured to read the computer program in the memory to perform at least one of the following:
receiving the first indication information which is sent by the terminal on a preconfigured uplink resource;
receiving the first indication information which is sent by the terminal on a pre-configured uplink resource activated by first DCI scrambled by a C-RNTI;
receiving the first indication information which is sent by the terminal on an uplink resource scheduled by second DCI scrambled by a C-RNTI;
receiving the first indication information which is sent by the terminal on the uplink resource obtained in the random access process; where the random access process includes: a contention random access process or a non-contention random access process;
receiving the first indication information which is sent by the terminal on the uplink resource applied through an uplink scheduling request (SR);
where the uplink resource includes: a physical uplink control channel (PUCCH) resource and/or a physical uplink shared channel (PUSCH) resource.

Optionally, the processor is further configured to read the computer program in the memory to perform:
sending first resource configuration information to the terminal before sending the first command;
   or,
sending a first command carrying first resource configuration information to the terminal;
where the first resource configuration information is configured to provide the pre-configured uplink resource to the terminal.

Optionally, when the random access process is the non-contention random access, the processor is further configured to read the computer program in the memory to perform:
sending second resource configuration information to the terminal before sending the first command;
   or,
sending a first command carrying second resource configuration information to the terminal;
where the second resource configuration information is configured to pre-configure a random access channel (RACH) resource.

Optionally, the processor is further configured to read the computer program in the memory to perform:
receiving the uplink scheduling request (SR) sent by the terminal, where the SR is configured to apply for an uplink resource for sending the first indication information;
sending third resource configuration information to the terminal according to the SR;
where the third resource configuration information is configured to pre-configure uplink resources for the terminal to send the first indication information.

Optionally, the processor is further configured to read the computer program in the memory to perform:
sending fourth resource configuration information to the terminal before sending the first command, or carrying the fourth resource configuration information in the first command; where the fourth resource configuration information is configured to configure a pre-configured SR resource for sending an SR.

Optionally, when the first indication information is the preconfigured dedicated uplink signal, the processor is further configured to read the computer program in the memory to perform:
sending configuration information for the dedicated uplink signal for the target cell to the terminal before sending the first command; or, sending to the terminal the first command carrying configuration information for the dedicated uplink signal for the target cell;
where the configuration information of the dedicated uplink signal is configured to configure sending resources of the dedicated uplink signal.

In Fig. 7, the bus architecture can include any number of interconnected buses and bridges, specifically one or more processors represented by processor 700 and various circuits of memory represented by memory 720 are linked together. The bus architecture can also link various other circuits such as peripherals, regulators, and power management circuits together, which are all well known in the art, so they are not further described herein. The bus interface provides an interface. The transceiver 710 can be a plurality of components, that is, including a transmitter and a receiver, providing a unit for communicating with various other devices on a transmission medium, and these transmission media include transmission media such as wireless channels, wired channels, and optical cables. The processor 700 is responsible for managing the bus architecture and general processing, and the memory 720 can store data used by the processor 700 when performing operations.

The processor 700 may be a central processing unit (CPU), an application specific integrated circuit (ASIC), a field programmable gate array (FPGA) or a complex programmable logic device (CPLD). The processor may also adopt a multi-core architecture.

According to the embodiment of the present disclosure, after the terminal successfully accesses the target cell according to the Layer 1 command and/or the Layer 2 command, the first indication information indicating the successful access of the terminal to the target cell is sent to the network-side device; or uplink data is sent to the network-side device, and the uplink data implicitly indicates that the terminal has successfully accesses the target cell, thereby improving the process of triggering mobility management (including service cell change/addition/switching) by L1/L2 commands, so that the terminal and the network-side behave in the same way, thereby improving the probability of successful switching.

It should be noted that the network-side device provided in the embodiment of the present disclosure is a network-side device capable of executing the above-mentioned indication method, and all embodiments of the above-mentioned indication method are applicable to the network-side device and can achieve the same or similar beneficial effects.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor (processor) to perform all or part of the steps of the method described in each embodiment of the present disclosure. The aforementioned storage medium includes: U disk, mobile hard disk, read-only memory (ROM), random access memory (RAM), disk or optical disk, etc. Various media that can store program codes.

The embodiment of the present disclosure also provides a processor-readable storage medium, which stores a computer program, and the computer program is used to enable the processor to execute the various steps in the indication method embodiment as described above; the processor-readable storage medium can be any available medium or data storage device that can be accessed by the processor, including but not limited to magnetic storage (such as floppy disks, hard disks, magnetic tapes, magneto-optical disks (MO), etc.), optical storage (such as CDs, DVDs, BDs, HVDs, etc.), and semiconductor storage (such as ROM, Erasable Programmable Read-Only Memory ( EPROM ), Electrically Erasable Programmable Read - Only Memory ( EEPROM), non-volatile memory (NAND FLASH)), solid- state disks (SSD)), etc.

The embodiment of the present disclosure further provides a chip, which includes a processor and a communication interface, where the communication interface is coupled to the processor, and the processor is used to run programs or instructions to implement the various processes of the above-mentioned indication method embodiment, and can achieve the same technical effect. To avoid repetition, it will not be repeated here.

It should be understood that the chip mentioned in the embodiments of the present disclosure may also be referred to as a system-level chip, a system chip, a chip system or a system-on-chip chip, etc.

The embodiments of the present disclosure further provide a computer program/program product, which is stored in a storage medium, and is executed by at least one processor to implement the various processes of the above-mentioned indication method embodiment, and can achieve the same technical effect. To avoid repetition, it will not be repeated here. Those skilled in the art should understand that the embodiments of the present disclosure can be provided as methods, systems, or computer program products. Therefore, the present disclosure can take the form of a complete hardware embodiment, a complete software embodiment, or an embodiment combining software and hardware. Moreover, the present disclosure can take the form of a computer program product implemented on one or more computer-usable storage media (including but not limited to disk storage and optical storage, etc.) containing computer-usable program codes.

The present disclosure is described with reference to the flowcharts and/or block diagrams of the methods, devices (systems), and computer program products according to the embodiments of the present disclosure. It should be understood that each process and/or box in the flowchart and/or block diagram, as well as the combination of the processes and/or boxes in the flowchart and/or block diagram, can be implemented by computer executable instructions. These computer executable instructions can be provided to a processor of a general-purpose computer, a special-purpose computer, an embedded processor, or other programmable data processing device to produce a machine, so that the instructions executed by the processor of the computer or other programmable data processing device produce a device for implementing the functions specified in one process or multiple processes in the flowchart and/or one box or multiple boxes in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more flows in the flowchart and/or one or more blocks in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. An indication method, comprising:
a terminal receiving a first command, wherein the first command is a Layer 1 command and/or a Layer 2 command;
after the terminal successfully accesses a target cell according to the first command, the terminal sending first indication information and/or uplink data to a network-side device; wherein the first indication information is configured to indicate that the terminal successfully accesses the target cell; the uplink data is further configured to implicitly indicate that the terminal successfully accesses the target cell.

2. The method according to claim 1, wherein the first command is configured to instruct the terminal to perform at least one of the following operations:
change of primary cell;
cell handover;
change of primary and secondary cells;
addition of primary and secondary cells;
addition of secondary cell;
change of secondary cell.

3. The method according to claim 1, wherein the first indication information comprises at least one of the following:
uplink radio resource control (RRC) message;
uplink control information (UCI);
uplink media access control control element (MAC CE);
pre-configured dedicated uplink signal.

4. The method according to claim 1, wherein the uplink data is carried by at least one of the following:
a physical uplink shared channel (PUSCH) scrambled through a cell-radio network temporary identifier (C-RNTI) of the terminal;
uplink shared channel (UL-SCH).

5. The method according to any one of claims 1 to 4, wherein the first indication information comprises at least one of the following information:
terminal identifier;
target cell identifier;
indication of successful access to the target cell;
beam index;
transmission configuration indication (TCI) identifier.

6. The method according to claim 1, wherein the terminal sending the first indication information to the network-side device comprising at least one of the following:
the terminal directly sending the first indication information on a pre-configured uplink resource;
the terminal sending the first indication information on a pre-configured uplink resource activated by a first DCI scrambled by a C-RNTI;
the terminal sending the first indication information on an uplink resource scheduled by a second DCI scrambled by a C-RNTI;
the terminal sending the first indication information on an uplink resource obtained in a random access process; wherein the random access process comprises: a contention random access process or a non-contention random access process;
the terminal sending the first indication information on an uplink resource applied through an uplink scheduling request (SR);
the uplink resource comprises: a physical uplink control channel (PUCCH) resource and/or a physical uplink shared channel (PUSCH) resource.

7. The method according to claim 6, further comprising:
the terminal determining the pre-configured uplink resource according to first resource configuration information received before receiving the first command;
or,
the terminal determining the pre-configured uplink resource according to first resource configuration information carried by the first command;
wherein the first resource configuration information is configured to provide the pre-configured uplink resource for the terminal.

8. The method according to claim 6, wherein when the random access process is a non-contention random access, the method further comprises:
the terminal determining, according to second resource configuration information received before receiving the first command, a preconfigured random access channel (RACH) resource, and initiating the non-contention random access process on the preconfigured RACH resource;
or,
the terminal determining, according to second resource configuration information carried by the first command, a preconfigured RACH resource, and initiating the non-contention random access process on the preconfigured RACH resource;
wherein the second resource configuration information is configured to pre-configure the RACH resource.

9. The method according to claim 6, further comprising:
the terminal sending an SR to the network-side device, wherein the SR is configured to apply for an uplink resource for sending the first indication information;
the terminal receiving third resource configuration information sent by the network-side device; wherein the third resource configuration information is configured to configure uplink resources for the terminal to send the first indication information.

10. The method according to claim 9, wherein before the terminal sending the SR to the network-side device, the method comprises:
the terminal receiving fourth resource configuration information sent by the network-side device before receiving the first command, or the terminal obtaining fourth resource configuration information sent by the network-side device in the first command;
the terminal determining, according to the fourth resource configuration information, a pre-configured SR resource for sending the SR;
wherein the fourth resource configuration information is configured to pre-configure the SR resource.

11. The method according to claim 3, wherein when the first indication information is a preconfigured dedicated uplink signal, the method further comprises:
the terminal receiving configuration information of a dedicated uplink signal for the target cell sent by the network-side device before receiving the first command; or the terminal obtaining configuration information of a dedicated uplink signal for the target cell sent by the network-side device in the first command;
wherein the terminal determining a sending resource of the dedicated uplink signal according to the configuration information of the dedicated uplink signal.

12. A method of indicating, comprising:
a network-side device receiving a first indication information and/or uplink data sent by the terminal;
the network-side device determining, based on the first indication information and/or the uplink data, that the terminal successfully accesses a target cell according to a first command; wherein the first command is a Layer 1 command and/or a Layer 2 command.

13. The method according to claim 12, wherein the first command is configured to instruct the terminal to perform at least one of the following operations:
change of primary cell;
cell handover;
change of primary and secondary cells;
addition of primary and secondary cells;
addition of secondary cell;
change of secondary cell.

14. The method according to claim 12, wherein the first indication information comprises at least one of the following:
uplink radio resource control (RRC) message;
uplink control information (UCI);
uplink media access control control element (MAC CE);
pre-configured dedicated uplink signal.

15. The method according to claim 12, wherein the uplink data is carried by at least one of the following:
a physical uplink shared channel (PUSCH) scrambled through a cell-radio network temporary identifier (C-RNTI) of the terminal;
uplink shared channel (UL-SCH).

16. The method according to any one of claims 12 to 15, wherein the first indication information comprises at least one of the following information:
terminal identifier;
target cell identifier;
indication of successful access to the target cell;
beam index;
transmission configuration indication (TCI) identifier.

17. The method according to claim 16, wherein when the first indication information comprises a beam index and/or a TCI identifier, the method further comprises:
the network-side device transmitting data according to a beam indicated by the beam index and/or the TCI identifier.

18. The method according to claim 12, wherein the network-side device receiving the first indication information sent by the terminal comprises at least one of the following:
the network-side device receiving the first indication information which is sent by the terminal on a preconfigured uplink resource;
the network-side device receiving the first indication information which is sent by the terminal on a pre-configured uplink resource activated by first DCI scrambled by a C-RNTI;
the network-side device receiving the first indication information which is sent by the terminal on an uplink resource scheduled by second DCI scrambled by a C-RNTI;
the network-side device receiving the first indication information which is sent by the terminal on the uplink resource obtained in the random access process; wherein the random access process comprises: a contention random access process or a non-contention random access process;
the network-side device receiving the first indication information which is sent by the terminal on the uplink resource applied through an uplink scheduling request (SR);
wherein the uplink resource comprises: a physical uplink control channel (PUCCH) resource and/or a physical uplink shared channel (PUSCH) resource.

19. The method according to claim 18, further comprising:
the network-side device sending first resource configuration information to the terminal before sending the first command;
or,
the network-side device sending a first command carrying first resource configuration information to the terminal;
wherein the first resource configuration information is configured to provide the pre-configured uplink resource to the terminal.

20. The method according to claim 18, wherein when the random access process is the non-contention random access, the method further comprises:
the network-side device sending second resource configuration information to the terminal before sending the first command;
or,
the network-side device sending a first command carrying second resource configuration information to the terminal;
wherein the second resource configuration information is configured to pre-configure a random access channel (RACH) resource.

21. The method according to claim 18, further comprising:
the network-side device receiving the uplink scheduling request (SR) sent by the terminal, wherein the SR is configured to apply for an uplink resource for sending the first indication information;
the network-side device sending third resource configuration information to the terminal according to the SR;
wherein the third resource configuration information is configured to pre-configure uplink resources for the terminal to send the first indication information.

22. The method according to claim 21, wherein before the network-side device receiving the uplink scheduling request sent by the terminal, the method further comprises:
the network-side device sending fourth resource configuration information to the terminal before sending the first command, or the network-side device carrying the fourth resource configuration information in the first command; wherein the fourth resource configuration information is configured to configure a pre-configured SR resource for sending an SR.

23. The method according to claim 14, wherein when the first indication information is the preconfigured dedicated uplink signal, the method further comprises:
sending configuration information for the dedicated uplink signal for the target cell to the terminal before sending the first command; or, sending to the terminal the first command carrying configuration information for the dedicated uplink signal for the target cell;
wherein the configuration information of the dedicated uplink signal is configured to configure sending resources of the dedicated uplink signal.

24. A terminal, comprising:
a first receiving unit, configured to receive a first command, wherein the first command is a Layer 1 command and/or a Layer 2 command;
a first sending unit, configured to, after the terminal successfully accesses a target cell according to the first command, send first indication information and/or uplink data to a network-side device; wherein the first indication information is configured to indicate that the terminal successfully accesses the target cell; the uplink data is further configured to implicitly indicate that the terminal successfully accesses the target cell.

25. The terminal according to claim 24, wherein the first command is configured to instruct the terminal to perform at least one of the following operations:
change of primary cell;
cell handover;
change of primary and secondary cells;
addition of primary and secondary cells;
addition of secondary cell;
change of secondary cell.

26. The terminal according to claim 24, wherein the first indication information comprises at least one of the following:
uplink radio resource control (RRC) message;
uplink control information (UCI);
uplink media access control control element (MAC CE);
pre-configured dedicated uplink signal.

27. The terminal according to claim 24, wherein the uplink data is carried by at least one of the following:
a physical uplink shared channel (PUSCH) scrambled through a cell-radio network temporary identifier (C-RNTI) of the terminal;
uplink shared channel (UL-SCH).

28. The terminal according to any one of claims 24 to 27, wherein the first indication information comprises at least one of the following information:
terminal identifier;
target cell identifier;
indication of successful access to the target cell;
beam index;
transmission configuration indication (TCI) identifier.

29. The terminal according to claim 24, wherein first sending unit is configured to perform at least one of the following:
directly sending the first indication information on a pre-configured uplink resource;
sending the first indication information on a pre-configured uplink resource activated by a first DCI scrambled by a C-RNTI;
sending the first indication information on an uplink resource scheduled by a second DCI scrambled by a C-RNTI;
sending the first indication information on an uplink resource obtained in a random access process; wherein the random access process comprises: a contention random access process or a non-contention random access process;
sending the first indication information on an uplink resource applied through an uplink scheduling request (SR);
the uplink resource comprises: a physical uplink control channel (PUCCH) resource and/or a physical uplink shared channel (PUSCH) resource.

30. The terminal according to claim29, further comprising:
a first resource determining unit, configured to
determine the pre-configured uplink resource according to first resource configuration information received before receiving the first command;
or,
determine the pre-configured uplink resource according to first resource configuration information carried by the first command;
wherein the first resource configuration information is configured to provide the pre-configured uplink resource for the terminal.

31. The terminal according to claim 29, wherein when the random access process is a non-contention random access, the terminal further comprises: a second resource determining unit configured to
determine, according to second resource configuration information received before receiving the first command, a preconfigured random access channel (RACH) resource, and initiate the non-contention random access process on the preconfigured RACH resource;
or,
determine, according to second resource configuration information carried by the first command, a preconfigured RACH resource, and initiate the non-contention random access process on the preconfigured RACH resource;
wherein the second resource configuration information is configured to pre-configure the RACH resource.

32. The terminal according to claim 30, further comprising:
a SR sending unit configured to send an SR to the network-side device, wherein the SR is configured to apply for an uplink resource for sending the first indication information;
an information obtaining unit, configured to receive third resource configuration information sent by the network-side device;
wherein the third resource configuration information is configured to configure uplink resources for the terminal to send the first indication information.

33. The terminal according to claim 32, further comprising:
an applying unit, configured to receive fourth resource configuration information sent by the network-side device before receiving the first command, or obtain fourth resource configuration information sent by the network-side device in the first command;
a third resource determining unit, configured to determine, according to the fourth resource configuration information, a pre-configured SR resource for sending the SR;
wherein the fourth resource configuration information is configured to pre-configure the SR resource.

34. The terminal according to claim 26, wherein when the first indication information is a preconfigured dedicated uplink signal, the terminal further comprises:
a configuration receiving unit, configured to receive configuration information of a dedicated uplink signal for the target cell sent by the network-side device before receiving the first command; or obtain configuration information of a dedicated uplink signal for the target cell sent by the network-side device in the first command;
a fourth resource determining unit, configured to determine a sending resource of the dedicated uplink signal according to the configuration information of the dedicated uplink signal.

35. A terminal, comprising a memory, a transceiver, and a processor, wherein
the memory is configured to store a computer program; the transceiver is configured to transmit and receive data under a control of the processor; and the processor is configured to read the computer program in the memory to perform:
receiving a first command, wherein the first command is a Layer 1 command and/or a Layer 2 command;
after the terminal successfully accesses a target cell according to the first command, sending first indication information and/or uplink data to a network-side device; wherein the first indication information is configured to indicate that the terminal successfully accesses the target cell; the uplink data is further configured to implicitly indicate that the terminal successfully accesses the target cell.

36. The terminal according to claim 35, wherein the first command is configured to instruct the terminal to perform at least one of the following operations:
change of primary cell;
cell handover;
change of primary and secondary cells;
addition of primary and secondary cells;
addition of secondary cell;
change of secondary cell.

37. The terminal according to claim 35, wherein the first indication information comprises at least one of the following:
uplink radio resource control (RRC) message;
uplink control information (UCI);
uplink media access control control element (MAC CE);
pre-configured dedicated uplink signal.

38. The terminal according to claim 35, wherein the uplink data is carried by at least one of the following:
a physical uplink shared channel (PUSCH) scrambled through a cell-radio network temporary identifier (C-RNTI) of the terminal;
uplink shared channel (UL-SCH).

39. The terminal according to any one of claims 35 to 38, wherein the first indication information comprises at least one of the following information:
terminal identifier;
target cell identifier;
indication of successful access to the target cell;
beam index;
transmission configuration indication (TCI) identifier.

40. The terminal according to claim 35, wherein the processor is further configured to read the computer program in the memory to perform at least one of the following:
directly sending the first indication information on a pre-configured uplink resource;
sending the first indication information on a pre-configured uplink resource activated by a first DCI scrambled by a C-RNTI;
sending the first indication information on an uplink resource scheduled by a second DCI scrambled by a C-RNTI;
sending the first indication information on an uplink resource obtained in a random access process; wherein the random access process comprises: a contention random access process or a non-contention random access process;
sending the first indication information on an uplink resource applied through an uplink scheduling request (SR);
the uplink resource comprises: a physical uplink control channel (PUCCH) resource and/or a physical uplink shared channel (PUSCH) resource.

41. The terminal according to claim 40, wherein the processor is further configured to read the computer program in the memory to perform:
determining the pre-configured uplink resource according to first resource configuration information received before receiving the first command;
or,
determining the pre-configured uplink resource according to first resource configuration information carried by the first command;
wherein the first resource configuration information is configured to provide the pre-configured uplink resource for the terminal.

42. The terminal according to claim 40, wherein when the random access process is a non-contention random access, the processor is further configured to read the computer program in the memory to perform
determining, according to second resource configuration information received before receiving the first command, a preconfigured random access channel (RACH) resource, and initiating the non-contention random access process on the preconfigured RACH resource;
or,
determining, according to second resource configuration information carried by the first command, a preconfigured RACH resource, and initiating the non-contention random access process on the preconfigured RACH resource;
wherein the second resource configuration information is configured to pre-configure the RACH resource.

43. The terminal according to claim 40, wherein the processor is further configured to read the computer program in the memory to perform:
sending an SR to the network-side device, wherein the SR is configured to apply for an uplink resource for sending the first indication information;
receiving third resource configuration information sent by the network-side device;
wherein the third resource configuration information is configured to configure uplink resources for the terminal to send the first indication information.

44. The terminal according to claim 43, wherein the processor is further configured to read the computer program in the memory to perform:
receiving fourth resource configuration information sent by the network-side device before receiving the first command, or the terminal obtaining fourth resource configuration information sent by the network-side device in the first command;
determining, according to the fourth resource configuration information, a pre-configured SR resource for sending the SR;
wherein the fourth resource configuration information is configured to pre-configure the SR resource.

45. The terminal according to claim 37, wherein when the first indication information is a preconfigured dedicated uplink signal, the processor is further configured to read the computer program in the memory to perform:
receiving configuration information of a dedicated uplink signal for the target cell sent by the network-side device before receiving the first command; or obtaining configuration information of a dedicated uplink signal for the target cell sent by the network-side device in the first command;
determining a sending resource of the dedicated uplink signal according to the configuration information of the dedicated uplink signal.

46. A network-side device, comprising:
a second receiving unit, configured to receive a first indication information and/or uplink data sent by the terminal;
a determining unit, configured to determine, based on the first indication information and/or the uplink data, that the terminal successfully accesses a target cell according to a first command; wherein the first command is a Layer 1 command and/or a Layer 2 command.

47. The network-side device according to claim 46, wherein the first command is configured to instruct the terminal to perform at least one of the following operations:
change of primary cell;
cell handover;
change of primary and secondary cells;
addition of primary and secondary cells;
addition of secondary cell;
change of secondary cell.

48. The network-side device according to claim 46, wherein the first indication information comprises at least one of the following:
uplink radio resource control (RRC) message;
uplink control information (UCI);
uplink media access control control element (MAC CE);
pre-configured dedicated uplink signal.

49. The network-side device according to claim 46, wherein the uplink data is carried by at least one of the following:
a physical uplink shared channel (PUSCH) scrambled through a cell-radio network temporary identifier (C-RNTI) of the terminal;
uplink shared channel (UL-SCH).

50. The network-side device according to any one of claims 46 to 49, wherein the first indication information comprises at least one of the following information:
terminal identifier;
target cell identifier;
indication of successful access to the target cell;
beam index;
transmission configuration indication (TCI) identifier.

51. The network-side device according to claim 50, wherein when the first indication information comprises a beam index and/or a TCI identifier, the method further comprises:
a data transmission unit, configured to transmit data according to a beam indicated by the beam index and/or the TCI identifier.

52. The network-side device according to claim 46, wherein the second receiving unit is configured to perform at least one of the following:
receiving the first indication information which is sent by the terminal on a preconfigured uplink resource;
receiving the first indication information which is sent by the terminal on a pre-configured uplink resource activated by first DCI scrambled by a C-RNTI;
receiving the first indication information which is sent by the terminal on an uplink resource scheduled by second DCI scrambled by a C-RNTI;
receiving the first indication information which is sent by the terminal on the uplink resource obtained in the random access process; wherein the random access process comprises: a contention random access process or a non-contention random access process;
receiving the first indication information which is sent by the terminal on the uplink resource applied through an uplink scheduling request (SR);
wherein the uplink resource comprises: a physical uplink control channel (PUCCH) resource and/or a physical uplink shared channel (PUSCH) resource.

53. The network-side device according to claim 52, further comprising:
a third sending unit, configured to send first resource configuration information to the terminal before sending the first command;
or,
send a first command carrying first resource configuration information to the terminal;
wherein the first resource configuration information is configured to provide the pre-configured uplink resource to the terminal.

54. The network-side device according to claim 52, wherein when the random access process is the non-contention random access, the network-side device further comprises:
a fourth sending unit, configured to send second resource configuration information to the terminal before sending the first command;
or,
send a first command carrying second resource configuration information to the terminal;
wherein the second resource configuration information is configured to pre-configure a random access channel (RACH) resource.

55. The network-side device according to claim 52, further comprising:
a third receiving unit, configured to receive the uplink scheduling request (SR) sent by the terminal, wherein the SR is configured to apply for an uplink resource for sending the first indication information;
a fifth sending unit, configured to send third resource configuration information to the terminal according to the SR;
wherein the third resource configuration information is configured to pre-configure uplink resources for the terminal to send the first indication information.

56. The network-side device according to claim 55, further comprising:
a sixth sending unit, configured to send fourth resource configuration information to the terminal before sending the first command, or carry the fourth resource configuration information in the first command; wherein the fourth resource configuration information is configured to configure a pre-configured SR resource for sending an SR.

57. The network-side device according to claim 48, wherein when the first indication information is the preconfigured dedicated uplink signal, the network-side device further comprises:
a seventh sending unit, configured to send configuration information for the dedicated uplink signal for the target cell to the terminal before sending the first command; or, send to the terminal the first command carrying configuration information for the dedicated uplink signal for the target cell;
wherein the configuration information of the dedicated uplink signal is configured to configure sending resources of the dedicated uplink signal.

58. A network-side device, comprising a memory, a transceiver, and a processor, wherein
the memory is configured to store a computer program; the transceiver is configured to transmit and receive data under a control of the processor; and the processor is configured to read the computer program in the memory to perform:
receiving a first indication information and/or uplink data sent by the terminal;
determining, based on the first indication information and/or the uplink data, that the terminal successfully accesses a target cell according to a first command; wherein the first command is a Layer 1 command and/or a Layer 2 command.

59. The network-side device according to claim 58, wherein the first command is configured to instruct the terminal to perform at least one of the following operations:
change of primary cell;
cell handover;
change of primary and secondary cells;
addition of primary and secondary cells;
addition of secondary cell;
change of secondary cell.

60. The network-side device according to claim 58, wherein the first indication information comprises at least one of the following:
uplink radio resource control (RRC) message;
uplink control information (UCI);
uplink media access control control element (MAC CE);
pre-configured dedicated uplink signal.

61. The network-side device according to claim 58, wherein the uplink data is carried by at least one of the following:
a physical uplink shared channel (PUSCH) scrambled through a cell-radio network temporary identifier (C-RNTI) of the terminal;
uplink shared channel (UL-SCH).

62. The network-side device according to any one of claims 58 to 61, wherein the first indication information comprises at least one of the following information:
terminal identifier;
target cell identifier;
indication of successful access to the target cell;
beam index;
transmission configuration indication (TCI) identifier.

63. The network-side device according to claim 62, wherein when the first indication information comprises a beam index and/or a TCI identifier, processor is further configured to read the computer program in the memory to perform:
transmitting data according to a beam indicated by the beam index and/or the TCI identifier.

64. The network-side device according to claim 58, wherein the processor is further configured to read the computer program in the memory to perform at least one of the following:
receiving the first indication information which is sent by the terminal on a preconfigured uplink resource;
receiving the first indication information which is sent by the terminal on a pre-configured uplink resource activated by first DCI scrambled by a C-RNTI;
receiving the first indication information which is sent by the terminal on an uplink resource scheduled by second DCI scrambled by a C-RNTI;
receiving the first indication information which is sent by the terminal on the uplink resource obtained in the random access process; wherein the random access process comprises: a contention random access process or a non-contention random access process;
receiving the first indication information which is sent by the terminal on the uplink resource applied through an uplink scheduling request (SR);
wherein the uplink resource comprises: a physical uplink control channel (PUCCH) resource and/or a physical uplink shared channel (PUSCH) resource.

65. The network-side device according to claim 64, wherein the processor is further configured to read the computer program in the memory to perform:
sending first resource configuration information to the terminal before sending the first command;
or,
sending a first command carrying first resource configuration information to the terminal;
wherein the first resource configuration information is configured to provide the pre-configured uplink resource to the terminal.

66. The network-side device according to claim 64, wherein when the random access process is the non-contention random access, the processor is further configured to read the computer program in the memory to perform:
sending second resource configuration information to the terminal before sending the first command;
or,
sending a first command carrying second resource configuration information to the terminal;
wherein the second resource configuration information is configured to pre-configure a random access channel (RACH) resource.

67. The network-side device according to claim 64, wherein the processor is further configured to read the computer program in the memory to perform:
receiving the uplink scheduling request (SR) sent by the terminal, wherein the SR is configured to apply for an uplink resource for sending the first indication information;
sending third resource configuration information to the terminal according to the SR;
wherein the third resource configuration information is configured to pre-configure uplink resources for the terminal to send the first indication information.

68. The network-side device according to claim 67, wherein the processor is further configured to read the computer program in the memory to perform:
sending fourth resource configuration information to the terminal before sending the first command, or carrying the fourth resource configuration information in the first command; wherein the fourth resource configuration information is configured to configure a pre-configured SR resource for sending an SR.

69. The network-side device according to claim 60, wherein when the first indication information is the preconfigured dedicated uplink signal, the processor is further configured to read the computer program in the memory to perform:
sending configuration information for the dedicated uplink signal for the target cell to the terminal before sending the first command; or, sending to the terminal the first command carrying configuration information for the dedicated uplink signal for the target cell;
wherein the configuration information of the dedicated uplink signal is configured to configure sending resources of the dedicated uplink signal.

70. A processor-readable storage medium, storing a computer program, wherein the computer program is configured to enable the processor to perform the method according to any one of claims 1 to 11, or to perform the method according to any one of claims 12 to 23.
